(19) Europäisches Patentamt / European Patent Office / Office européen des brevets

(11) **EP 4 565 654 B1**

(12) **EUROPÄISCHE PATENTSCHRIFT**


(45) Veröffentlichungstag und Bekanntmachung des Hinweises auf die Patenterteilung:
**15.04.2026 Patentblatt 2026/16**

(21) Anmeldenummer: **23751598.6**

(22) Anmeldetag: **01.08.2023**

(51) Internationale Patentklassifikation (IPC):
***C08L 55/02*** $^{(2006.01)}$ ***C08F 279/04*** $^{(2006.01)}$
***C08L 25/12*** $^{(2006.01)}$ ***C08L 69/00*** $^{(2006.01)}$
***C08L 77/02*** $^{(2006.01)}$

(52) Gemeinsame Patentklassifikation (CPC):
(C-Sets verfügbar)
**C08L 55/02; C08F 279/04; C08F 285/00;**
**C08L 25/12;** C08L 2205/025; C08L 2205/03;
C08L 2205/035 (Forts.)

(86) Internationale Anmeldenummer:
**PCT/EP2023/071271**

(87) Internationale Veröffentlichungsnummer:
**WO 2024/028311 (08.02.2024 Gazette 2024/06)**


(54) **THERMOPLASTISCHE ABS-FORMMASSE MIT GUTER EIGENSCHAFTSKOMBINATION VON VERARBEITBARKEIT UND OBERFLÄCHENQUALITÄT**

THERMOPLASTIC ABS MOULDING COMPOUND HAVING A GOOD PROPERTY COMBINATION OF PROCESSABILITY AND SURFACE QUALITY

COMPOSÉ DE MOULAGE ABS THERMOPLASTIQUE PRÉSENTANT UNE BONNE COMBINAISON DE PROPRIÉTÉS D'APTITUDE AU TRAITEMENT ET DE QUALITÉ DE SURFACE


(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.08.2022 EP 22188871**

(43) Veröffentlichungstag der Anmeldung:
**11.06.2025 Patentblatt 2025/24**



(73) Patentinhaber: **INEOS Styrolution Group GmbH**
**60325 Frankfurt (DE)**

(72) Erfinder:
- **MICHAELIS DE VASCONCELLOS, Janna**
**45549 Sprockhövel (DE)**
- **MICHELS, Gisbert**
**51375 Leverkusen (DE)**
- **JANSEN, Ulrich**
**41541 Dormagen (DE)**
- **SCHNABEL, Thorsten**
**26127 Oldenburg (DE)**
- **LEBBE, Dominique**
**2530 Boechout (BE)**
- **DE VET, Walter**
**5126 BJ Gilze (NL)**

(74) Vertreter: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**



(56) Entgegenhaltungen:
**WO-A1-00/29458** **WO-A1-01/62848**
**WO-A1-01/62850** **WO-A1-2016/184765**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08F 279/04, C08F 212/08, C08F 220/44;**
**C08F 285/00, C08F 212/08, C08F 220/44;**
**C08L 25/12, C08L 55/02, C08L 55/02, C08L 55/02, C08K 5/20, C08K 5/098, C08L 83/04;**
**C08L 55/02, C08L 55/02;**
**C08L 55/02, C08L 55/02, C08L 55/02**

## Beschreibung

Die vorliegende Erfindung betrifft eine Mischung P von ABS-Pfropfkautschuken, ein Verfahren zu deren Herstellung und deren Verwendung. Ferner umfasst die Erfindung thermoplastische Formmassen F enthaltend die Mischung P, ein Verfahren zur Herstellung der thermoplastischen Formmassen F, daraus erhältliche Formkörper, sowie deren Verwendung.

Seit vielen Jahren werden Acrylnitril-Butadien-Styrol-Copolymere (ABS) und Formmassen des ABS-Typs, die noch weitere Comonomere (als Bausteine) und/oder weitere thermoplastische Komponenten enthalten können, als thermoplastische Formmassen für die Herstellung von Formteilen für unterschiedliche Anwendungen verwendet.

Das Eigenschaftsspektrum dieser thermoplastischen Formmassen kann in weiten Bereichen variiert werden. Besonders interessant für viele Anwendungen ist, dass derartige Formmassen eine besonders hohe Zähigkeit (etwa Schlagzähigkeit und/oder Kerbschlagzähigkeit) aufweisen. Zudem ist eine gute Verarbeitbarkeit (thermoplastische Fließfähigkeit, MVR), Wärmeformbeständigkeit und ein sehr guter Oberflächenglanz und insbesondere eine sehr gute Glanzstabilität gewünscht.

Aus der WO 2001/62848 sind Polymerzusammensetzungen bekannt, die ein Pfropfkautschukpolymer (I) erhalten durch Emulsionspolymerisation von Styrol und Acrylnitril in Gegenwart eines Polybutadienlatex (A) mit einem mittleren Teilchendurchmesser $d_{50}$ von 230 bis 330 nm und ein Pfropfkautschukpolymer (II) erhalten durch Emulsionspolymerisation von Styrol und Acrylnitril in Gegenwart eines Polybutadienlatex (B) mit einem mittleren Teilchendurchmesser $d_{50}$ von 340 bis 480 nm enthalten, gegebenenfalls ein Pfropfkautschukpolymerisat (III) erhalten durch Emulsionspolymerisation von Styrol und Acrylnitril, in Gegenwart eines Polybutadienlatex (C), und ein kautschukfreies Copolymerisat aus Styrol und Acrylnitril enthalten. Die Polybutadienlatizes (A) und (B) werden durch Saatpolymerisation unter Verwendung eines Polybutadienlatex (C) mit einem mittleren Teilchendurchmesser von 10 bis 220 nm als Saatlatex erhalten. Die eingesetzte Saatlatex-Menge wird nicht offenbart.

Das Gewichtsverhältnis der Pfropfkautschukpolymere (I):(II) beträgt bevorzugt 70:30 bis 35:65 (z.B. auch 50:50). Das Gewichtsverhältnis der Pfropfkautschukpolymere [(I) +(II)]:(III) beträgt bevorzugt 25:75 bis 65:35.

In beispielhaften Pfropfkautschukpolymermischungen aus (I), (II) und (III) beträgt das Gew.-Verhältnis [(I) +(II)] : (III) 50:50; der berechnete Anteil des verwendeten Polybutadienlatex (C) - bezogen auf Polybutadienlatizes (A), (B) und (C) - beträgt 46,3 Gew.-%.

Die aus WO 2001/62848 bekannten Polymerzusammensetzungen weisen eine hohe Zähigkeit (Schlagzähigkeit und/oder Kerbschlagzähigkeit) und eine gute Verarbeitbarkeit (thermoplastische Fließfähigkeit, MVR) auf. Der Oberflächenglanz, insbesondere der Glanz unter Praxisbedingungen (280°C/50°C), sowie die Glanzstabilität sind allerdings noch verbesserungsbedürftig.

Im Hinblick auf die ständig steigenden Anforderungen an die Kunststoffmaterialien und auf neue Anwendungsbereiche werden zunehmend ABS-Pfropfpolymere mit speziellen Eigenschaftskombinationen benötigt. Entscheidend für viele Eigenschaften der ABS-Pfropfpolymere ist deren Teilchengrößenverteilung, die sich besonders günstig einstellen lässt, wenn wenigstens ein Pfropfpolymer durch Direktwachstum in einem Saat-Verfahren hergestellt wird. Nachteilig am Direktwachstumsverfahren sind hingegen die langen Zykluszeiten, die benötigt werden, um große Teilchen herzustellen. Dabei werden für längere Zeit Reaktionsbedingungen unter erhöhter Temperatur aufrechterhalten, die die Bildung von 4-Vinylcyclohexen (VCH) begünstigt, einem Diels-Alder-Produkt, welches oftmals bei der Polymerisation von Butadien in einer unerwünschten Nebenreaktion in der Größenordnung von 1 bis 2 Gew.-% (bezogen auf den Feststoffgehalt des Latex) entsteht.

4-Vinylcyclohexen ist geruchsintensiv und potentiell kanzerogen. Ferner zählt es wie die nicht umgesetzten Monomere, zu den flüchtigen organischen Verbindungen (VOCs). Werden die VOCs nicht aufwendig entfernt oder vermieden, was in der Regel mit erhöhtem Aufwand (prozesstechnisch und/oder energetisch) und/oder mit Einbußen bei den Produkteigenschaften (z.B. thermische Belastung, schlechtere Kautschukeffizienz) verbunden ist, enthalten auch die aus den Pfropfpolymeren hergestellten Formmassen noch VOCs. Die flüchtigen organischen Verbindungen können in die Umgebungsluft abgegeben werden. Dies ist aufgrund der Toxizität der VOCs aus gesundheitlichen und ökologischen Gesichtspunkten unerwünscht. So fordert der Markt Pfropfcopolymere und daraus hergestellte Formmassen mit einem niedrigen Gehalt an VOCs bei gleichbleibenden Verarbeitungs- und Anwendungseigenschaften.

In WO 2014/170407 werden ABS-Pfropfcopolymere und diese enthaltende Formmassen mit einer guten Kerbschlagzähigkeit und einem verbesserten Oberflächenglanz beschrieben. Die Pfropfgrundlage (Butadienlatex, $d_{50}$: 80 bis 120 nm) wird mittels eines Acrylat/Acrylamid-Copolymers agglomeriert.

Der agglomerierte Butadienlatex (bimodal $d_{50}$: 80 bis 120 nm und 350 bis 550 nm) wird dann mit Styrol und Acrylnitril mittels Emulsionspolymerisation gepfropft.

Nachteilig ist, dass die Herstellung der vorgenannten ABS-Pfropfcopolymere, im Unterschied zu Pfropfcopolymeren deren Butadienlatex durch Saatpolymerisation gebildet wurde, technisch aufwendiger ist (zusätzliche Herstellung und Lagerhaltung der Ausgangsstoffe und des agglomerierenden Copolymers) und dass die Glanzstabilität von im Spritzguss hergestellten Formteilen nicht befriedigend und verbesserungsbedürftig ist.

Demnach besteht ein Bedürfnis, ABS-Pfropfcopolymere und entsprechende Formmassen bereitzustellen, die einerseits eine gute Zähigkeit (Schlagzähigkeit und/oder Kerbschlagzähigkeit), eine gute Verarbeitbarkeit (thermoplastische Fließfähigkeit, MVR) und einen sehr guten Oberflächenglanz und insbesondere eine sehr gute Glanzstabilität aufweise. Ferner sollte der VOC-Anteil der ABS-Propfcopolymere, insbesondere der 4-Vinylcyclohexen-Anteil, möglichst gering sein (max. 4000 ppm) und der Herstellprozess ökonomisch (möglichst kurze Laufzeiten bzw. Batchdauer) und ökologisch vorteilhaft sein.

Die Aufgabe wurde durch die vorliegende Erfindung gemäß den Ansprüchen gelöst.

Ein Gegenstand der Erfindung ist eine Mischung P enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 95:5 bis 50:50, bevorzugt 80:20 bis 65:35, wobei Styrol und/oder Acrylnitril teilweise (< 50 Gew.-%) ersetzt werden kann durch alpha-Methylstyrol, Methylmethacrylat und/oder N-Phenylmaleinimid, in Gegenwart von mindestens einem Polybutadienlatex A mit einem mittleren Teilchendurchmesser $d_{50}$ von 230 bis 330 nm, bevorzugt 240 bis 320 nm, insbesondere 250 bis 310 nm, und mindestens einem Polybutadienlatex B mit einem mittleren Teilchendurchmesser $d_{50}$ von 340 bis 480 nm, bevorzugt 350 bis 470 nm, insbesondere 360 bis 460 nm, wobei die Polybutadienlatizes A und B mittels Saatpolymerisation (radikalische Emulsionspolymerisation unter Verwendung eines Saatlatex) ausgehend von mindestens einem, vorzugsweise einem, Polybutadienlatex C (als Saatlatex) mit einem mittleren Teilchendurchmesser $d_{50}$ von 10 bis 220 nm, bevorzugt 20 bis 210 nm, insbesondere 30 bis 200 nm, erhalten wurden,

(II) mindestens einen Pfropfkautschuk P-II, erhalten durch Emulsionspolymerisation von Styrol und Acrylnitril im Gewichtsverhältnis Styrol:Acrylnitril von 95:5 bis 50:50, bevorzugt 80:20 bis 65:35, wobei Styrol und/oder Acrylnitril teilweise (< 50 Gew.-%) ersetzt werden kann durch alpha-Methylstyrol, Methylmethacrylat und/oder N-Phenylmaleinimid, in Gegenwart des mindestens einen Polybutadienlatex C mit einem mittleren Teilchendurchmesser $d_{50}$ von 10 bis 220 nm, bevorzugt 30 bis 200 nm, und

(III) optional ein oder mehrere Additive und/oder Verarbeitungshilfsmittel D,

dadurch gekennzeichnet, dass

- bezogen auf die eingesetzten Polybutadienlatizes A bis C (jeweils gerechnet als Feststoff der Latizes), deren Summe 100 Gew.-% beträgt - der Anteil des Polybutadienlatex C 36 bis 43 Gew.-% beträgt, und

das Gewichtsverhältnis A:B der Polybutadienlatizes A und B 1,1:1 bis 5:1 (jeweils gerechnet als Feststoff der Latizes A und B) beträgt.

Bevorzugt ist eine erfindungsgemäße Mischung P, worin der Anteil des Polybutadienlatex C 37 bis 43 Gew.-%, besonders bevorzugt 38 bis 42 Gew.-%, ganz besonders bevorzugt 39 bis 42 Gew.-%, beträgt.

Weiterhin bevorzugt ist eine erfindungsgemäße Mischung P, worin das Gewichtsverhältnis A:B der eingesetzten Polybutadienlatizes A und B bevorzugt 1,3:1 bis 4,5:1, oftmals 2,5:1 bis 4:1, beträgt.

Bevorzugt ist eine erfindungsgemäße Mischung P, worin der Polybutadienlatex A mittels Saatpolymerisation ausgehend von mindestens einem, vorzugsweise einem, Polybutadienlatex C (als Saatlatex) wie zuvor beschrieben erhalten wurde, und wobei der Polybutadienlatex C in einer Menge von 1,90 bis 4,50 Gew.-%, bevorzugt 2,40 bis 3,80 Gew.- %, eingesetzt wurde, bezogen auf die gesamte eingesetzte Monomermenge (i.a. Butadienmenge) zur Herstellung von Polybutadienlatex A.

Ferner bevorzugt ist eine erfindungsgemäße Mischung P, worin der Polybutadienlatex B mittels Saatpolymerisation ausgehend von mindestens einem, vorzugsweise einem, Polybutadienlatex C (als Saatlatex) wie zuvor beschrieben erhalten wurde, und wobei der Polybutadienlatex C in einer Menge von 0,75 bis 1,55 Gew.-%, bevorzugt 0,95 bis 1,35 Gew.-%, eingesetzt wurde, bezogen auf die gesamte eingesetzte Monomermenge (i.a. Butadienmenge) zur Herstellung von Polybutadienlatex B.

Bevorzugt besteht die Mischung P aus den vorstehend genannten Komponenten (I) und (II) (Pfropfkautschuke P-I und P-II) und gegebenenfalls der Komponente (III) (einem oder mehreren Additiven und/oder Verarbeitungshilfsmitteln D).

In einer weiteren bevorzugten Ausführungsform besteht die Mischung P aus den Komponenten (I) und (II) (Pfropfkautschuke P-I und P-II) und der Komponente (III) (einem oder mehreren Additiven und/oder Verarbeitungshilfsmitteln D).

Die Begriffe "Pfropfkautschuk", "Pfropfkautschukpolymerisat" und "Pfropfkautschukpolymer" sind hierbei im weitesten Sinne synonym zu verstehen als Pfropfcopolymer mit einer Pfropfgrundstufe (Kern) aus Polybutadienlatex und einer aus thermoplastischem Material auf Basis von Styrol und Acrylnitril, sowie gegebenenfalls der zuvor beschriebenen

Comonomere (d.h. alpha-Methylstyrol, Methylmethacrylat und/oder N-Phenylmaleinimid), bestehenden Pfropfhülle.

Ebenso sind hier die Begriffe "Butadienlatex", "Polybutadienlatex", "Butadienpolymerlatex" und "Butadienpolymeratlatex" im weitesten Sinne synonym zu verstehen als partikuläre Partikel, die hauptsächlich, daher zu mindestens 50 Gew.-% aus Butadien-Einheiten bestehen. Unter "Latizes" sind Emulsionen und Dispersionen im weitesten Sinne synonym zu verstehen.

Es wird allgemein vom Fachmann verstanden werden, dass mit "Styrol", "Acrylnitril", "Butadien" usw. die von dem jeweiligen Monomer abgeleiteten Struktureinheiten, die in die (Co)polymer-Struktur eingebettet sind, gemeint sind.

Gewichtsangaben, Angaben und Definitionen von Gewichtsverhältnissen, Angaben in Gewichtsprozent (Gew.-%) und Angaben in Gewichtsteilen (Gew.-Teilen) beziehen sich in der gesamten Anmeldung allgemein auf die jeweiligen Gewichte der Trockensubstanz (gerechnet als Feststoff), daher ohne enthaltene bzw. aufgesogene Flüssigkeiten (z.B. Wasser, Elektrolytlösung und ungebundene Monomere). "Gewichtsverhältnis" und "Masseverhältnis" sind synonym zu verstehen.

Wie hierin verwendet, sollen die Angaben in Gewichtsprozent (Gew.-%) so verstanden werden, dass die gesamte Zusammensetzung (z.B. der Mischung P oder der Formmasse F) stets 100 Gew.-% beträgt. Wenn eine Zusammensetzung einen bestimmten Anteil einer oder mehrerer Komponenten umfasst oder enthält, beträgt der Anteil an einer oder mehrerer anderer/anderen nicht-genannten Komponente(n) folglich 100 Gew.- % abzüglich (minus) des Anteils der einen oder mehreren genannten Komponente(n).

Wenn eine Zusammensetzung aus bestimmten Komponenten besteht, beträgt der Anteil dieser Komponenten in der Summe 100 Gew.-%. Der Fachmann wird leicht ermitteln, wie die restlichen Komponenten bei der Vorgabe des Anteils anderer Komponenten sein können.

Der mittlere Teilchendurchmesser $d_{50}$ der Polybutadienlatizes kann durch Scheibenzentrifugationsmessung wie in den Beispielen beschrieben ermittelt werden. Der Teilchendurchmesser $d_{50}$, der auch als $d_{50}$-Wert der integralen Massenverteilung bezeichnet wird, ist dabei als der Wert definiert, bei dem 50 Gew.-% der Teilchen einen kleineren und 50 Gew.-% der Teilchen einen größeren Durchmesser als den $d_{50}$-Wert aufweisen.

Für die Messung der Teilchengrößenverteilung mit der Scheibenzentrifuge DC 24000 von CPS Instruments, die mit einer Scheibe mit niedriger Dichte ausgestattet ist, wurde eine wässrige Zuckerlösung von 17,1 mL mit einem Dichtegradienten von 8 bis 20 Gew.- % Saccharose in der Zentrifugenscheibe verwendet, um ein stabiles Flotationsverhalten der Partikel zu erreichen. Zur Kalibrierung wurde ein Polybutadienlatex mit einer engen Verteilung und einer mittleren Partikelgröße von 405 nm verwendet. Die Messungen wurden bei einer Rotationsgeschwindigkeit der Scheibe von 24.000 U/min durchgeführt, indem 0,1 mL einer verdünnten Kautschukdispersion in eine wässrige 24%ige Saccharoselösung injiziert wurden. Die Massenverteilung der Teilchendurchmesser wurde mit Hilfe der Mie-Theorie berechnet.

Pfropfkautschuke P-I und P-II

Bevorzugt wird der Pfropfkautschuk P-I durch Emulsionspolymerisation von Styrol und Acrylnitril im Styrol:Acrylnitril-Gewichtsverhältnis von 80:20 bis 65:35 in Gegenwart der PolybutadienLatizes A und B erhalten. Bevorzugt beträgt das Styrol:Acrylnitril-Gewichtsverhältnis 77:23 bis 70:30. Ein Ausführungsbeispiel eines Pfropfkautschuks P-I ist auch dem untenstehenden experimentellen Beispielteil zu entnehmen.

Bevorzugt wird der Pfropfkautschuk P-II durch Emulsionspolymerisation von Styrol und Acrylnitril im Styrol:Acrylnitril-Gewichtsverhältnis von 80:20 bis 65:35 in Gegenwart des Polybutadienlatex C erhalten. Besonders bevorzugt beträgt das Styrol:Acrylnitril-Gewichtsverhältnis 77:23 bis 70:30. Bevorzugte Ausführungsbeispiele eines Pfropfkautschuks P-II ist auch dem untenstehenden experimentellen Beispielteil zu entnehmen.

Der Polybutadienlatex A weist einen mittleren Teilchendurchmesser $d_{50}$ von 230 bis 330 nm, bevorzugt von 240 bis 320 nm, insbesondere 250 bis 310 nm, auf. Bevorzugt weist der Polybutadienlatex A einen Gelgehalt von 30 bis 80 Gew.-%, besonders bevorzugt 40 bis 75 Gew.-%, insbesondere 45 bis 70 Gew.-%, auf.

In einer bevorzugten Ausführungsform weist der Polybutadienlatex A einen mittleren Teilchendurchmesser $d_{50}$ von 240 bis 320, insbesondere 250 bis 310 nm, und einen Gelgehalt von 30 bis 80 Gew.-%, bevorzugt 40 bis 75 Gew.-%, insbesondere 45 bis 70 Gew.-%, auf. Besonders bevorzugt weist bei der Polybutadienlatex A einen mittleren Teilchendurchmesser $d_{50}$ von 250 bis 310 nm und einen Gelgehalt von 45 bis 70 Gew.- % auf.

Ein besonders bevorzugtes Ausführungsbeispiel eines Polybutadienlatex A ist auch dem untenstehenden experimentellen Beispielteil zu entnehmen.

Die angegebenen Werte für die jeweiligen Gelgehalte können durch das hierzu übliche Verfahren durch Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart) ermittelt werden.

Die Gelgehalte der Polybutadienlatizes A, B und C und optional weiterer Latizes können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z. B. niedrige Reaktionstemperatur und/oder Abbruch der Polymerisationsreaktion vor

Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes).

Der Polybutadienlatex B weist einen mittleren Teilchendurchmesser $d_{50}$ von 340 bis 480 nm, bevorzugt von 350 bis 470 nm, insbesondere 360 bis 460 nm, auf. Bevorzugt weist der Polybutadienlatex B einen Gelgehalt von 50 bis 95 Gew.-%, insbesondere 55 bis 90 Gew.-%, auf.

In einer bevorzugten Ausführungsform weist der Polybutadienlatex B einen mittleren Teilchendurchmesser $d_{50}$ von 350 bis 470, insbesondere 360 bis 460 nm, und einen Gelgehalt von 50 bis 95 Gew.-%, insbesondere 55 bis 90 Gew.-%, auf. Besonders bevorzugt weist der Polybutadienlatex B einen mittleren Teilchendurchmesser $d_{50}$ von 360 bis 460 nm und einen Gelgehalt von 55 bis 90 Gew.-% auf.

Ein bevorzugtes Ausführungsbeispiel eines Polybutadienlatex B ist auch dem untenstehenden experimentellen Beispielteil zu entnehmen.

Der mindestens eine, bevorzugt eine, Polybutadienlatex C weist einen mittleren Teilchendurchmesser $d_{50}$ von 10 bis 220 nm, bevorzugt von 20 bis 210 nm, insbesondere 30 bis 200 nm, auf. Bevorzugt weist der Polybutadienlatex C einen Gelgehalt von 30 bis 98 Gew.-%, bevorzugt 40 bis 95 Gew.-%, insbesondere 50 bis 94 Gew.-%, auf.

In einer bevorzugten Ausführungsform weist der Polybutadienlatex C einen mittleren Teilchendurchmesser $d_{50}$ von 20 bis 210 nm, insbesondere 30 bis 200 nm, und einen Gelgehalt von 30 bis 98 Gew.-%, bevorzugt 40 bis 95 Gew.-%, insbesondere 50 bis 94 Gew.-%, auf.

Besonders bevorzugt weist der Polybutadienlatex C einen mittleren Teilchendurchmesser $d_{50}$ von 30 bis 200 nm und einen Gelgehalt von 50 bis 94 Gew.-% auf.

Bei Verwendung von einem Polybutadienlatex C mit einem mittleren Teilchendurchmesser $d_{50}$ oberhalb 80 nm, vorzugsweise oberhalb 90 nm, besonders bevorzugt oberhalb 100 nm, wird auch dieser Polybutadienlatex C selbst vorzugsweise durch Saatpolymerisation hergestellt. Der hierzu verwendbare Saatlatex C' (vorzugsweise ein Polybutadienlatex) besitzt bevorzugt einen mittleren Teilchendurchmesser $d_{50}$ von 10 bis 70 nm, vorzugsweise 20 bis 60 nm. Der Gelgehalt des Saatlatex C' beträgt 10 bis 95 Gew.-%, vorzugsweise 20 bis 90 Gew.-% und besonders bevorzugt 30 bis 85 Gew.-%.

Bevorzugt wird der Polybutadienlatex C mittels Saatpolymerisation ausgehend von mindestens einem, vorzugsweise einem, Saatlatex C', vorzugsweise einem Polybutadien-saatlatex (als Saatlatex C'), wie zuvor beschrieben erhalten, wobei der Saatlatex C' in einer Menge von 4,00 bis 9,00 Gew.-%, bevorzugt 5,50 bis 7,50 Gew.-%, eingesetzt wurde, bezogen auf die gesamte eingesetzte Monomermenge (i.A. Butadienmenge) zur Herstellung von Polybutadienlatex C.

Ein bevorzugtes Ausführungsbeispiel eines Polybutadienlatex C ist dem untenstehenden experimentellen Beispielteil zu entnehmen.

Bevorzugt ist eine erfindungsgemäße Mischung P wie zuvor beschrieben enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 80:20 bis 65:35 in Gegenwart von:

mindestens einem Polybutadienlatex A mit einem mittleren Teilchendurchmesser $d_{50}$ von 250 bis 310 nm und einem Gelgehalt von 45 bis 70 Gew.-%, und

mindestens einem Polybutadienlatex B mit einem mittleren Teilchendurchmesser $d_{50}$ von 360 bis 460 nm und einem Gelgehalt von 55 bis 90 Gew.-%,

wobei die Polybutadienlatizes A und B mittels Saatpolymerisation ausgehend von einem mindestens einem, vorzugsweise einem, Polybutadienlatex C mit einem mittleren Teilchendurchmesser $d_{50}$ von 30 bis 200 nm und einem Gelgehalt von 50 bis 94 Gew.-% (als Saatlatex) erhalten wurden, und

das Gewichtsverhältnis A:B der eingesetzten Polybutadienlatizes A und B 1,3:1 bis 4,5:1 (jeweils gerechnet als Feststoff der eingesetzten Latizes) beträgt;

(II) mindestens einen Pfropfkautschuk P-II, erhalten durch Emulsionspolymerisation von Styrol und Acrylnitril im Gewichtsverhältnis Styrol:Acrylnitril von 80:20 bis 65:35 in Gegenwart des mindestens einen Polybutadienlatex C mit einem mittleren Teilchendurchmesser $d_{50}$ von 30 bis 200 nm und einem Gelgehalt von 50 bis 92 Gew.-%,
wobei - bezogen auf die eingesetzten Polybutadienlatizes A bis C (jeweils gerechnet als Feststoff der Latizes), deren Summe sich zu 100 Gew.-% addiert - derAnteil des Polybutadienlatex C 38 bis 42 Gew.-% beträgt,

(III) mindestens eine kautschukfreie Copolymer-Matrix P-III aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol

und/oder Acrylnitril durch Maleinsäureanhydrid,

(IV) optional ein oder mehrere Additive und/oder Verarbeitungshilfsmittel D.

Besonders bevorzugt ist eine erfindungsgemäße Mischung P wie zuvor beschrieben enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 80:20 bis 65:35 in Gegenwart von:

mindestens einem Polybutadienlatex A mit einem mittleren Teilchendurchmesser $d_{50}$ von 250 bis 310 nm und einem Gelgehalt von 45 bis 70 Gew.-%, und

mindestens einem Polybutadienlatex B mit einem mittleren Teilchendurchmesser $d_{50}$ von 360 bis 460 nm und einem Gelgehalt von 55 bis 90 Gew.-%,

wobei die Polybutadienlatizes A und B mittels Saatpolymerisation ausgehend von einem mindestens einem, vorzugsweise einem, Polybutadienlatex C mit einem mittleren Teilchendurchmesser $d_{50}$ von 30 bis 200 nm und einem Gelgehalt von 50 bis 94 Gew.-% (als Saatlatex) erhalten wurden,

und wobei das Gewichtsverhältnis A:B der eingesetzten Polybutadienlatizes A und B 1,3:1 bis 4,5:1, oftmals 2,5:1 bis 4:1 (jeweils gerechnet als Feststoff der eingesetzten Latizes), beträgt;

(II) mindestens einen Pfropfkautschuk P-II, erhalten durch Emulsionspolymerisation von Styrol und Acrylnitril im Gewichtsverhältnis Styrol:Acrylnitril von 80:20 bis 65:35 in Gegenwart des mindestens einen Polybutadienlatex C mit einem mittleren Teilchendurchmesser $d_{50}$ von 30 bis 200 nm und einem Gelgehalt von 50 bis 92 Gew.-%, wobei - bezogen auf die eingesetzten Polybutadienlatizes A bis C (jeweils gerechnet als Feststoff der Latizes) deren Summe sich zu 100 Gew.-% addiert - der Anteil des Polybutadienlatex C 39 bis 42 Gew.-%beträgt;

(III) mindestens eine kautschukfreie Copolymer-Matrix P-III aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol und/oder Acrylnitril durch Maleinsäureanhydrid,

(IV) optional ein oder mehrere Additive und/oder Verarbeitungshilfsmittel D.

Das Gewichtsverhältnis P-I:P-II der Pfropfkautschuke P-I und P-II in der erfindungsgemäßen Mischung P beträgt bevorzugt 62.5:37.5 bis 52:48, besonders bevorzugt 60:40 bis 53:47, ganz besonders bevorzugt 58:42 bis 54:46, insbesondere 55:45.

Auch in diesem Zusammenhang bezieht sich das Gewichtsverhältnis auf die Feststoffe der Polybutadienlatizes. Diese können gravimetrisch nach Trocknung (etwa bei einer Temperatur von 100 bis 200°C für 5 bis 60 min (z.B. in einem Umlufttrockenschrank)) ermittelt werden.

Die Polybutadienlatizes A und B, und gegebenenfalls C, werden, jeweils unabhängig voneinander, nach einem Saatpolymerisationstechnik-Verfahren hergestellt, wobei durch Emulsionspolymerisation von Butadien (mindestens 50 Gew.-% und gegebenenfalls weiteren Comonomeren) zunächst ein feinteiliges Polybutadien(co)polymer als Saatlatex hergestellt und dann dieser durch weiteren Umsatz mit Butadien (und gegebenenfalls weiteren Comonomeren) zu größeren Teilchen weiterpolymerisiert wird (siehe z. B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Saatlatex für die Polybutadienlatizes A und B wird Polybutadienlatex C eingesetzt.

Bevorzugt ist der Polybutadienlatex C hergestellt aus:

50 bis 100 Gew.-%, bevorzugt 80 bis 100 Gew.-%, insbesondere 90 bis 100 Gew.-%, Butadien, und

0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus: Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt ist der Polybutadienlatex C hergestellt aus:

90 bis 100 Gew.-% Butadien, und

0 bis 10 Gew.-% Styrol und/oder Acrylnitril.

Ganz besonders bevorzugt ist der Polybutadienlatex C ein Butadien-Homopolymer-Latex.
Ein besonders bevorzugtes Ausführungsbeispiel der Zusammensetzung eines Polybutadienlatex C ist auch dem untenstehenden experimentellen Beispielteil zu entnehmen.
Bevorzugt ist der Polybutadienlatex A hergestellt aus:
50 bis 100 Gew.-%, bevorzugt 80 bis 100 Gew.-%, insbesondere 90 bis 100 Gew.-%, Butadien; und 0 bis 50 Gew.-%, bevorzugt 0 bis 20 Gew.-%, insbesondere bevorzugt 0 bis 10 Gew.-%, von mit Butadien copolymerisierbaren Monomeren (Co-Monomeren), bevorzugt Monomeren ausgewählt aus der Gruppe bestehend aus:
Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.
Besonders bevorzugt ist der Polybutadienlatex A hergestellt aus:
90 bis 100 Gew.-% Butadien, und 0 bis 10 Gew.-% Styrol und/oder Acrylnitril.
Ein bevorzugtes Ausführungsbeispiel der Zusammensetzung eines Polybutadienlatex A ist auch dem untenstehenden experimentellen Beispielteil zu entnehmen.
Bevorzugt ist der Polybutadienlatex B hergestellt aus:
50 bis 100 Gew.-%, bevorzugt 80 bis 100 Gew.-%, insbesondere 90 bis 100 Gew.-%, Butadien; und 0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.
Besonders bevorzugt ist der Polybutadienlatex B hergestellt aus:
90 bis 100 Gew.-% Butadien, und 0 bis 10 Gew.-% Styrol und/oder Acrylnitril.
Ein besonders bevorzugtes Ausführungsbeispiel der Zusammensetzung eines Polybutadienlatex B ist auch dem untenstehenden experimentellen Beispielteil zu entnehmen.
Zur Herstellung des Polybutadienlatex A und des Polybutadienlatex B wird als Saatlatex jeweils (unabhängig voneinander) mindestens ein, vorzugsweise ein, Polybutadienlatex C mit einem mittleren Teilchendurchmesser $d_{50}$ von 10 bis 220 nm, vorzugsweise 20 bis 210 nm, besonders bevorzugt 30 bis 200 nm, eingesetzt.
Bevorzugt besteht der Pfropfkautschuk P-I aus:

15 bis 60 Gew.-%, insbesondere 20 bis 50 Gew.-%, einer Pfropfhülle, erhalten durch Emulsionspolymerisation von Styrol und Acrylnitril im Styrol:Acrylnitril-Gewichtsverhältnis von 95:5 bis 50:50, wobei Styrol und/oder Acrylnitril teilweise (< 50 Gew.-%) ersetzt werden kann durch alpha-Methylstyrol, Methylmethacrylat, N-Phenylmaleinimid oder Mischungen davon, und

40 bis 85 Gew.-%, insbesondere 50 bis 80 Gew.-%, einer Pfropfgrundstufe aus den Polybutadienlatizes A und B,

wobei das Gewichtsverhältnis A:B der Polybutadienlatizes A und B 1,1:1 bis 5:1, besonders bevorzugt 1,3:1 bis 4,5:1, oftmals 2,5:1 bis 4:1 (jeweils gerechnet als Feststoff der Latizes A und B), ist.

Die Feststoffe der Polybutadienlatizes können gravimetrisch nach Trocknung (etwa bei 50 bis 150°C für 5 bis 60 min (z.B. in einem Umlufttrockenschrank)) ermittelt werden.
Besonders bevorzugt besteht der Pfropfkautschuk P-I aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35, und

50 bis 80 Gew.-% einer Pfropfgrundstufe aus den Polybutadienlatizes A und B,

wobei das Gewichtsverhältnis A:B der Polybutadienlatizes A und B 1,1:1 bis 5:1, bevorzugt 1,3:1 bis 4,5:1, oftmals 2,5:1 bis 4:1 (jeweils gerechnet als Feststoff der Latizes A und B), ist.

Besonders bevorzugt besteht der Pfropfkautschuk P-I aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35, und

50 bis 80 Gew.-% einer Pfropfgrundstufe aus den Polybutadienlatizes A und B,

wobei das Gewichtsverhältnis A:B der Polybutadienlatizes A und B 1,3:1 bis 4,5:1, oftmals 2,5:1 bis 4:1 (jeweils gerechnet als Feststoff der Latizes A und B), ist.

Besonders bevorzugt besteht die Pfropfhülle des Pfropfkautschuks P-I nur aus Styrol und Acrylnitril in den vorgenannten Styrol:Acrylnitril-Gewichtsverhältnissen. Somit wird die Pfropfhülle des Pfropfkautschuks P-I erhalten durch Emulsionspolymerisation von Styrol und Acrylnitril allein, d.h. ohne teilweisen Ersatz von Styrol und Acrylnitril durch alpha-Methylstyrol, Methylmethacrylat, N-Phenylmaleinimid oder Mischungen davon. Bevorzugte Ausführungsbeispiele für die Zusammensetzung des Pfropfkautschuks P-I sind auch dem untenstehenden experimentellen Beispielteil zu entnehmen.

Der Pfropfkautschuk P-II besteht bevorzugt aus:

15 bis 60 Gew.-%, insbesondere 20 bis 50 Gew.-%, einer Pfropfhülle, erhalten durch Emulsionspolymerisation von Styrol und Acrylnitril im Styrol:Acrylnitril-Gewichtsverhältnis von 95:5 bis 50:50, wobei Styrol und/oder Acrylnitril teilweise (< 50 Gew.-%) ersetzt werden kann durch alpha-Methylstyrol, Methylmethacrylat, N-Phenylmaleinimid oder Mischungen davon, und

40 bis 85 Gew.-%, insbesondere 50 bis 80 Gew.-%, einer Pfropfgrundstufe aus Polybutadienlatex C.

Besonders bevorzugt besteht der Pfropfkautschuk P-II aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35, und

50 bis 80 Gew.-% einer Pfropfgrundstufe aus Polybutadienlatex C.

Ganz besonders bevorzugt besteht die Pfropfhülle des Pfropfkautschuks P-II nur aus Styrol und Acrylnitril in den vorgenannten Styrol:Acrylnitril-Gewichtsverhältnissen. Somit wird die Pfropfhülle des Pfropfkautschuks P-II erhalten durch Emulsionspolymerisation von Styrol und Acrylnitril allein, d.h. ohne teilweisen Ersatz von Styrol und Acrylnitril durch alpha-Methylstyrol, Methylmethacrylat, N-Phenylmaleinimid oder Mischungen davon.

Ein besonders bevorzugtes Ausführungsbeispiel für die Zusammensetzung des Pfropfkautschuks P-II ist auch dem untenstehenden experimentellen Beispielteil zu entnehmen.

Optional können die erfindungsgemäß eingesetzten Pfropfkautschuke P-I und P-II bzw. die erfindungsgemäße Mischung P übliche Additive und/oder Verarbeitungshilfsmittel D enthalten.

Die Additive und/oder Verarbeitungshilfsmittel D können in üblichen Mengen, bevorzugt in einer Menge von 0,2 bis 5,0, bevorzugt 0,3 bis 4,0 Gewichtsteilen, bezogen auf 100 Gewichtsteile der aus den Komponenten (I) und (II) bestehenden Mischung, eingesetzt werden. Oftmals werden als Additive und/oder Verarbeitungshilfsmittel D Antioxidantien und/oder thermische Stabilisatoren eingesetzt.

Das erfindungsgemäße Verfahren zur Herstellung der Mischung P umfasst die folgenden Schritte:

(i) Bereitstellen von mindestens einem Polybutadienlatex C mit einem mittleren Teilchendurchmesser $d_{50}$ von 10 bis 220 nm;

(ii) Herstellen von mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm durch Saatpolymerisation aus dem Polybutadienlatex C aus Schritt (i);

(iii) Herstellen eines Pfropfkautschuks P-I durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, in Gegenwart der Polybutadienlatizes A und B aus Schritt (ii),

(iv) Herstellen eines Pfropfkautschuks P-II durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, in Gegenwart des Polybutadienlatex C aus Schritt (i);

(v) gegebenenfalls Mischen der Emulsionen enthaltend die Pfropfkautschuke P-I und P-II aus Schritten (iii) und (iv);

(vi) Aufarbeitung der Pfropfkautschuke P-I und P-II aus den Schritten (iii) und (iv) oder Schritt (v); und

(vii) falls Schritt (v) nicht vorhanden, Mischen der Pfropfkautschuke P-I und P-II aus Schritt (vi);

wobei in Schritt (iii) das Gewichtsverhältnis A:B der eingesetzten Polybutadienlatizes A und B 1,1:1 bis 5:1, bevorzugt 1,3:1 bis 4,5:1, (jeweils gerechnet als Feststoff der Latizes A und B) beträgt, und

in Schritt (v) oder (vii) - bezogen auf die eingesetzten Polybutadienlatizes A bis C (jeweils gerechnet als Feststoff der Latizes), deren Summe 100 Gew.-% beträgt - der Anteil des mindestens einen Polybutadienlatex C 36 bis 43 Gew.-%, bevorzugt 37 bis 43 Gew.-%, besonders bevorzugt 38 bis 42 Gew.-%, beträgt.

Bevorzugt ist ein erfindungsgemäßes Verfahren zur Herstellung der Mischung P, wobei der Polybutadienlatex C in Schritt (i) durch Saatpolymerisation ausgehend von mindestens einem, vorzugsweise einem, Saatlatex C', vorzugsweise einem Polybutadiensaatlatex (als Saatlatex C'), Saatlatex C' (vorzugsweise ein Polybutadienlatex) mit einem mittleren Teilchendurchmesser $d_{50}$ von 10 bis 70 nm, vorzugsweise 20 bis 60 nm, erhalten wurde, und wobei der Saatlatex C' in einer Menge von 4,00 bis 9,00 Gew.-%, bevorzugt 5,50 bis 7,50 Gew.-%, eingesetzt wurde, bezogen auf die gesamte eingesetzte Monomermenge (i.A. Butadienmenge) zur Herstellung von Polybutadienlatex C.

Weiterhin bevorzugt ist ein erfindungsgemäßes Verfahren zur Herstellung der Mischung P, wobei in Schritt (ii) der Polybutadienlatex C zur Herstellung des Polybutadienlatex A in einer Menge von 1,90 bis 4,50 Gew.-%, bevorzugt 2,40 bis 3,80 Gew.-%, eingesetzt wurde, bezogen auf die gesamte eingesetzte Monomermenge (i.a. Butadienmenge) zur Herstellung von Polybutadienlatex A.

Weiterhin bevorzugt ist ein erfindungsgemäßes Verfahren zur Herstellung der Mischung P, wobei in Schritt (ii) der Polybutadienlatex C zur Herstellung des Polybutadienlatex B in einer Menge von 0,75 bis 1,55 Gew.-%, bevorzugt 0,95 bis 1,35 Gew.-%, eingesetzt wurde, bezogen auf die gesamte eingesetzte Monomermenge (i.a. Butadienmenge) zur Herstellung von Polybutadienlatex B.

Besonders bevorzugt ist ein erfindungsgemäßes Verfahren zur Herstellung der Mischung P, wobei

der Polybutadienlatex C in Schritt (i) durch Saatpolymerisation ausgehend von mindestens einem, vorzugsweise einem, Saatlatex C', vorzugsweise einem Polybutadiensaatlatex (als Saatlatex C'), Saatlatex C' (vorzugsweise ein Polybutadienlatex) mit einem mittleren Teilchendurchmesser $d_{50}$ von 10 bis 70 nm, vorzugsweise 20 bis 60 nm, erhalten wurde, und wobei der Saatlatex C' in einer Menge von 5,50 bis 7,50 Gew.-%, bevorzugt 4,00 bis 9,00 Gew.-%, eingesetzt wurde, bezogen auf die gesamte eingesetzte Monomermenge (i.A. Butadienmenge) zur Herstellung von Polybutadienlatex C;

in Schritt (ii) der Polybutadienlatex C zur Herstellung des Polybutadienlatex A in einer Menge von 1,90 bis 4,50 Gew.-%, bevorzugt 2,40 bis 3,80 Gew.-%, eingesetzt wurde, bezogen auf die gesamte eingesetzte Monomermenge (i.a. Butadienmenge) zur Herstellung von Polybutadienlatex A; und

in Schritt (ii) der Polybutadienlatex C zur Herstellung des Polybutadienlatex B in einer Menge von 0,75 bis 1,55 Gew.-%, bevorzugt 0,95 bis 1,35 Gew.-%, eingesetzt wurde, bezogen auf die gesamte eingesetzte Monomermenge (i.a. Butadienmenge) zur Herstellung von Polybutadienlatex B.

Als Emulgator bei der Herstellung der Polybutadienlatizes A, B und C (Schritte (i) und (ii) des erfindungsgemäßen Verfahrens) und/oder bei der Emulsionspolymerisation zur Herstellung der Pfropfkautschuke P-I und P-II (Schritte (iii) und (iv) des erfindungsgemäßen Verfahrens) können, unabhängig voneinander, übliche anionische Emulgatoren eingesetzt werden. Bevorzugt werden als Emulgatoren Alkylsulfate, Alkylsulfonate, Aralkylsulfonate, Seifen gesättigter oder ungesättigter Fettsäuren sowie alkalisch disproportionierter oder hydrierter Abietin- oder Tallölsäuren oder Mischungen hiervon verwendet. Vorzugsweise werden Emulgatoren mit Carboxylgruppen (z. B. Salze von $C_{10}$-$C_{18}$-Fettsäuren, disproportionierte Abietinsäure, Emulgatoren gemäß DE-OS 36 39 904 und DE-OS 39 13 509) eingesetzt.

In einer weiteren bevorzugten Ausführungsform können alkalische Seifen von Natrium- und Kaliumsalzen von disproportionierten und/oder dehydrogenierten und/oder hydrierten und/oder partiell hydrierten Harzen (Kolophonium)

mit einem Gehalt an Dehydroabietinsäure von mindestens 30 Gew.-% und einem Gehalt von Abietinsäure von maximal 1 Gew.-% als Emulgatoren eingesetzt werden.

Es können weiterhin Salze, Säuren und Basen bei der Emulsionspolymerisation der Polybutadienlatizes A, B und C als Additiv D eingesetzt werden, z. B. Schwefelsäure, Phosphorsäure, Lösungen von Natriumhydroxid, Kaliumhydroxid, Natrium- und Kaliumsalze von Sulfaten und Phosphaten, insbesondere kann Tetranatriumpyrophosphat eingesetzt werden.

Zusätzlich können bei der Herstellung der Polybutadienlatizes A, B und C und/oder bei der Emulsionspolymerisation zur Herstellung der Pfropfkautschuke P-I und P-II Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer- Menge bei der Emulsionspolymerisation). Geeignete Molekulargewichtsregler sind beispielsweise Alkylmercaptane, wie n-Dodecylmercaptan, tert-Dodecylmercaptan; dimeres a-Methylstyrol und Terpinolen.

Als Initiatoren bei der Herstellung der Polybutadienlatizes A, B und C können beliebige Initiatoren eingesetzt werden, die bei der gewählten Reaktionstemperatur unter Bildung von Radikalen zerfallen. Typischerweise können dafür Initiatoren eingesetzt werden, die allein thermisch zerfallen oder solche die in Gegenwart eines Redoxsystems zerfallen.

Bevorzugt wird bei der Emulsionspolymerisation von Styrol und Acrylnitril (sowie gegebenenfalls alpha-Methylstyrol, Methylmethacrylat und/oder N-Phenylmaleinimid) zur Herstellung der Pfropfkautschuke P-I und P-II (Schritte (iii) und (iv) des erfindungsgemäßen Verfahrens) - unabhängig voneinander - mindestens eine organische und/oder anorganische Peroxidverbindung, bevorzugt mindestens eine anorganische Peroxidverbindung, als Initiator verwendet.

Geeignete organische und/oder anorganische Peroxid-Verbindungen (umfassend mindestens eine Peroxidgruppe R-O-O-H und/oder R-O-O-R) sind z.B. Wasserstoffperoxid, Cumolhydroperoxid, tert-Butylhydroperoxid, p-Menthanhydroperoxid, Ammonium-, Kalium- und Natriumpersulfat. Insbesondere werden als Initiator anorganische Peroxid-Salze, wie Peroxodisulfate (Persulfate), Perphosphate und Perborate von Ammonium, Natrium oder Kalium, eingesetzt. Besonders bevorzugt werden als Initiatoren Natrium- und/oder Kaliumpersulfate eingesetzt.

Die Polymerisationstemperatur bei der Emulsionspolymerisation von Styrol und Acrylnitril (sowie gegebenenfalls alpha-Methylstyrol, Methylmethacrylat und/oder N-Phenylmaleinimid) zur Herstellung der Pfropfkautschuke P-I und P-II (Schritte (iii) und (iv) des erfindungsgemäßen Verfahrens) beträgt - unabhängig voneinander - im Allgemeinen 25 bis 99°C, vorzugsweise 40 bis 90°C, besonders bevorzugt 54 bis 85°C.

Vorzugsweise wird die Pfropfpolymerisation (Emulsionspolymerisation von Styrol und Acrylnitril) jedoch so durchgeführt, dass der Temperatur-Unterschied zwischen Beginn und Ende der Dosierung des Initiators mindestens 10 °C, vorzugsweise mindestens 15 °C und besonders bevorzugt mindestens 20 °C beträgt.

Die Herstellung der Pfropfkautschuke P-I und P-II (Schritte (iii) und (iv) des erfindungsgemäßen Verfahrens) erfolgt mittels Emulsionspolymerisation durch Vorlage der Pfropfgrundlage und kontinuierliche Dosierung der Monomeren.

Die Monomere der Pfropfhülle des Pfropfkautschuks P-I, d.h. Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, werden separat oder als Monomer-Gemisch kontinuierlich zu den Polybutadienlatizes A und B, in den gegebenen Mengen zugegeben und polymerisiert.

Die Monomere der Pfropfhülle des Pfropfkautschuks P-II, d.h. Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, werden separat oder als Monomer-Gemisch kontinuierlich zu dem Polybutadienlatex C, in den gegebenen Mengen zugegeben und polymerisiert.

Bei der Herstellung des Pfropfkautschuks P-I und bei der Herstellung des Pfropfkautschuks P-II (Schritte (iii) und (iv) des erfindungsgemäßen Verfahrens) kann - unabhängig voneinander - die Dosierung von Styrol und Acrylnitril (wobei Styrol und/oder Acrylnitril teilweise ersetzt werden kann durch alpha-Methylstyrol, Methylmethacrylat und/oder N-Phenylmaleinimid) und die Dosierung des Initiators gleichzeitig gestartet werden.

Bei der Herstellung des Pfropfkautschuks P-I und bei der Herstellung des Pfropfkautschuks P-II in Schritt iii) und iv) des erfindungsgemäßen Verfahrens kann - unabhängig voneinander - die Dosierung von Styrol und Acrylnitril innerhalb von 2 bis 6 Stunden, bevorzugt 4 bis 6 Stunden, erfolgen.

Des Weiteren kann bei der Herstellung des Pfropfkautschuks P-I und bei der Herstellung des Pfropfkautschuks P-II in Schritt iii) und iv) des erfindungsgemäßen Verfahrens - unabhängig voneinander - die Dosierung der gesamten Menge des Initiators innerhalb von 2 bis 6 Stunden, bevorzugt 4 bis 6 Stunden, erfolgen.

Als Initiator kann beispielsweise mindestens eine organische und/oder anorganische Peroxidverbindung, bevorzugt mindestens eine anorganische Peroxidverbindung, besonders bevorzugt mindestens ein anorganisches Peroxid-Salz, ganz besonders bevorzugt Natrium- und/oder Kaliumpersulfat, eingesetzt werden.

Die Gesamtmenge des Initiators beträgt oftmals 0,1 bis 1,0 Gew.-Teile, bevorzugt 0,2 bis 0,9 Gew.-Teile, besonders bevorzugt 0,3 bis 0,7 Gew.-Teile (bezogen auf die gesamte Monomermenge bei der Emulsionspolymerisation und des Feststoffes der Polybutadienlatizes).

Oftmals umfassen die Schritte (iii) und (iv) des erfindungsgemäßen Verfahrens zur Herstellung der Mischung P

wie zuvor beschrieben zusätzlich eine Nachreaktionszeit von 1,5 bis 2,5 Stunden, bevorzugt 2 Stunden, nach Ende aller Dosierungen.

Bevorzugt ist ein erfindungsgemäßen Verfahren zur Herstellung der Mischung P, worin Schritt (v) vorhanden ist, d.h. die Emulsionen enthaltend die Pfropfkautschuke P-I und P-II aus den Schritten (iii) und (iv) werden gemischt.

Die Aufarbeitung der erhaltenen Dispersion des Pfropfkautschuks P-I oder P-II in Schritt vi) des erfindungsgemäßen Verfahrens kann nach einem dem Fachmann bekannten Verfahren erfolgen. Beispielsweise erfolgt die Aufarbeitung mittels Fällung der Pfropfkautschuke und Abtrennung des Dispersionswassers.

Hierfür können die Pfropfkautschuke P-I und P-II im gewünschten Verhältnis gemischt und anschließend zusammen bzw. co-gefällt werden, oder die Pfropfkautschuke P-I und P-II werden separat aufgearbeitet bzw. gefällt und dann im gewünschten Verhältnis für die erfindungsgemäße Mischung P verwendet.

Bevorzugt erfolgt die Aufarbeitung mittels Co-Fällung der Pfropfkautschuke P-I und P-II und Abtrennung des Dispersionswassers, wobei die Pfropfkautschuke P-I und P-II im gewünschten Verhältnis gemischt und anschließend cogefällt werden.

Zur Fällung können zum Beispiel beliebige koagulierende Mittel zugegeben werden. Beispielsweise kann durch eine Elektrolytlösung (z.B. eine Salzlösung, eine Säurelösung oder eine Salz- und Säurelösung) koaguliert werden. Bevorzugte wässrige Elektrolytlösungen, sind solche enthaltend ein oder mehr Salze ausgewählt aus der Gruppe bestehend aus: Magnesiumsulfat, Kieserit, Pentahydrit, Hexahydrit, Epsomit (Bittersalz), Calciumchlorid, Natriumchlorid oder Mischungen aus zwei oder mehr daraus und/oder ein oder mehr Säuren (insbesondere Schwefelsäure und/oder Essigsäure). Beispielhaft kann mittels einer Magnesiumsulfat/Schwefelsäure-Lösung (z.B. enthaltend 1 Gew.-% Magnesiumsulfat und 0,07 Gew.-% Schwefelsäure in Wasser) koaguliert werden.

Die Abtrennung des Dispersionswassers kann in üblicher Weise erfolgen, beispielsweise durch Sieben, Filtrieren, Dekantieren oder Zentrifugieren. Nach Abtrennung des Dispersionswassers wird ein wasserfeuchtes Pfropfpolymer erhalten, welches üblicherweise einen Restwassergehalt von bis zu 60 Gew.-% aufweist. Das Pfropfpolymer kann getrocknet, teilgetrocknet oder feucht zur Herstellung der erfindungsgemäßen thermoplastischen Formmasse verwendet werden.

Um die Pfropfkautschuke P-I und P-II während der Aufarbeitung vor thermischer Schädigung zu schützen, und um die Aufarbeitung sicher und gefahrlos durchführen zu können, ist es oftmals üblich Antioxidantien als Komponente (III) zuzugeben. Beispielsweise können ein oder mehrere phenolische Antioxidantien (s. dazu auch Additive D), sowie beliebige andere Substanzen, welche die thermische Beständigkeit der Pfropfkautschuke P-I und P-II erhöhen, bevorzugt nach der Emulsionspolymerisation zugesetzt werden. Typischerweise werden diese Antioxidantien, z.B. in Form einer oder mehreren Emulsionen oder Dispersionen, mit dem Pfropfkautschuk P-I und/oder P-II durch Rühren vermischt.

In der Regel werden die Antioxidantien in Mengen bis zu 4 Gewichtsteilen, bezogen auf 100 Gewichtsteile der aus den Komponenten (I) und (II) bestehenden Mischung, eingesetzt.

Bevorzugt erfolgt die Aufarbeitung gemäß Schritt (vi) des erfindungsgemäßen Verfahrens zur Herstellung der Mischung P durch

(vi-1) Fällen (gegebenenfalls Co-Fällen) der Pfropfkautschuke P-I und P-II aus der diese Pfropfkautschuke umfassenden Emulsion aus den Schritten (iii) und (iv) oder Schritt (v),

(vi-2) Entwässern der gefällten Pfropfkautschuke P-I und P-II aus Schritt (vi-1) durch Filtration oder Zentrifugation, und

(vi-3) gegebenenfalls Trocknen der entwässerten Pfropfkautschuke P-I und P-II aus Schritt (vi-2).

Der optionale Schritt (vi-3) umfasst das Trocknen der entwässerten Pfropfkautschuke P-I und P-II aus Schritt (vi-2).

In einer bevorzugten Ausführungsform umfasst das erfindungsgemäße Verfahren den Schritt (vi-3), bevorzugt Schritt (vi-3'):

Trocknen der entwässerten Pfropfkautschuke P-I und P-II aus Schritt (vi-2), wobei ein Pfropfkautschuk-Pulver erhalten wird, das eine Restfeuchte von kleiner oder gleich 5 Gew.-% aufweist.

Bevorzugt erfolgt das Trocknen der wasserfeuchten Pfropfkautschuke mit einer Restfeuchte von kleiner oder gleich 25 Gew.-% unter Verwendung eines Trocknungsgases, wobei der Pfropfkautschuk in dem Trocknungsgas bewegt wird (z.B. von dem strömenden Trocknungsgas mitgerissen wird) und das Trocknungsgas eine Temperatur im Bereich von 50 bis 160 °C, bevorzugt von 55 bis 155 °C, besonders bevorzugt von 60 bis 150 °C, aufweist. Bevorzugt wird als Trocknungsgas Luft, Stickstoff oder beliebige Mischungen hiervon verwendet.

In einer bevorzugten Ausführungsform erfolgt das Trocknen der entwässerten Pfropfkautschuke P-I und P-II in Schritt (vi-3) unter Verwendung eines Fließbetttrockners (Wirbelschichttrockner) und/oder eines Stromtrockners (Flashtrockner). Insbesondere erfolgt das Trocknen in Schritt (vi-3) wie in WO 2017/093468 A1 beschrieben.

Fließbetttrockner (Wirbelschichttrockner) und Stromtrockner (Flashtrockner) sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden.

Insbesondere wird das Trocknen in Schritt (vi-3) unter Verwendung eines Fließbetttrockners durchgeführt, wobei das Trocknungsgas eine Temperatur im Bereich von 50 bis 100 °C, bevorzugt 55 bis 90 °C, besonders bevorzugt 60 bis 85 °C, aufweist und die mittlere Verweilzeit der Pfropfkautschuke P-I und P-II im Fließbetttrockner 1 bis 60 min, bevorzugt 5 bis 50 min, besonders bevorzugt 10 bis 40 min, beträgt.

Insbesondere wird das Trocknen in Schritt (vi-3) unter Verwendung eines Stromtrockners durchgeführt, wobei das Trocknungsgas eine Temperatur im Bereich von 100 bis 160 °C, bevorzugt 110 bis 155 °C, besonders bevorzugt 130 bis 150 °C, aufweist und die mittlere Verweilzeit der Pfropfkautschuke P-I und P-II im Stromtrockner typischerweise 1 bis 300 Sekunden, bevorzugt 1 bis 120 Sekunden, besonders bevorzugt 5 bis 60 Sekunden, beträgt.

In einer bevorzugten Ausführungsform weist das getrocknete Pfropfkautschuk-Pulver erhalten in Schritt (vi-3) eine Restfeuchte im Bereich von 0,01 bis 5 Gew.-%, bevorzugt 0,05 bis 2 Gew.-%, insbesondere bevorzugt 0,1 bis 1 Gew.-%, auf.

Besonders bevorzugt ist ein erfindungsgemäßes Verfahren zur Herstellung der Mischung P, worin Schritt (v) vorhanden ist, und die Aufarbeitung gemäß Schritt (vi) erfolgt durch

(vi-1) Co-Fällen der Pfropfkautschuke P-I und P-II aus der diese Pfropfkautschuke umfassenden Emulsion aus Schritt (v),

(vi-2) Abtrennen der gefällten Pfropfkautschuke P-I und P-II (Mischung P) aus Schritt (vi-1) durch Filtration oder Zentrifugation, und

(vi-3) gegebenenfalls Trocknen der abgetrennten Pfropfkautschuke P-I und P-II (Mischung P) aus Schritt (vi-2).

Gemäß einer alternativen bevorzugten Ausführungsform können die nach Schritt (vi-2) erhaltenen feuchten, entwässerten Pfropfkautschuke P-I und P-II mit einer Schmelze aus thermoplastischen Komponenten, die ein kautschukfreies Copolymer P-III und optional nicht aus Vinylaromaten aufgebaute thermoplastische Polymere T und/oder Additive und/oder Verarbeitungshilfsmittel D', enthält, vermischt werden (beispielsweise in einem Knetreaktor) (s. z.B. EP-A 0867463).

Auf die zuvor angeführten Details zur Emulsionspolymerisation gemäß den Schritten (ii), (iii) und (iv), zur Aufarbeitung, insbesondere der Fällung und Entwässerung, der Pfropfkautschuke P-I und P-II gemäß Schritt (vi) bzw. den Schritten (vi-1), (vi-2) und (vi-3) des erfindungsgemäßen Verfahrens zur Herstellung der Mischung P wird verwiesen.

Ein weiterer Gegenstand der Erfindung ist eine durch das erfindungsgemäße Verfahren erhaltene Mischung P.

Thermoplastische Formmasse F

Ein weiterer Aspekt der Erfindung ist eine thermoplastische Formmasse F enthaltend die Komponenten (a) bis (c):

(a) erfindungsgemäße Mischung P enthaltend:

(I) mindestens einen Pfropfkautschuk P-I, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart von:

mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm,

wobei die Polybutadienlatizes A und B mittels Saatpolymerisation ausgehend von mindestens einem, vorzugsweise einem, Polybutadienlatex C (als Saatlatex) mit einem mittleren Teilchendurchmesser $d_{50}$ von 10 bis 220 nm erhalten wurden;

(II) mindestens einen Pfropfkautschuk P-II, erhalten durch Emulsionspolymerisation von Styrol und Acrylnitril im

Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des mindestens einen Polybutadienlatex C mit einem mittleren Teilchendurchmesser $d_{50}$ von 10 bis 220 nm, und

(III) optional ein oder mehrere Additive und/oder Verarbeitungshilfsmittel D,
dadurch gekennzeichnet, dass

- bezogen auf die eingesetzten Polybutadienlatizes A bis C (jeweils gerechnet als Feststoff der Latizes) deren Summe 100 Gew.-% beträgt - der Anteil des Polybutadienlatex C 36 bis 43 Gew.-% beträgt, und

das Gewichtsverhältnis A:B der eingesetzten Polybutadienlatizes A und B 1,1:1 bis 5:1 (jeweils gerechnet als Feststoff der Latizes A und B) beträgt;

(b) mindestens ein kautschukfreies Copolymer P-III (= Matrix-Copolymer) aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol und/oder Acrylnitril durch Maleinsäureanhydrid; und

(c) optional ein oder mehrere Additive und/oder Verarbeitungshilfsmittel D'.

Die thermoplastische Formmasse F kann beliebige Mengen an Komponente (a) - der erfindungsgemäßen Mischung P enthaltend die Pfropfkautschuke P-I und P-II - umfassen.
Die thermoplastische Formmasse F kann beliebige Mengen an Komponente (b) - dem kautschukfreiem Copolymer P-III - umfassen.
Bevorzugte erfindungsgemäße thermoplastische Formmassen F enthalten:

a) 10 bis 60 Gew.-% erfindungsgemäße Mischung P;
b) 40 bis 90 Gew.-% Copolymer P-III; und
c) 0 bis 20 Gew.-% Additive und/oder Verarbeitungshilfsmittel D';

wobei sich die Anteile der Komponenten a) bis c) zu 100 Gew.-% addieren.
Besonders bevorzugte erfindungsgemäße thermoplastische Formmassen F enthalten:

a) 15 bis 50 Gew.-%, bevorzugt 20 bis 40 Gew.-%, erfindungsgemäße Mischung P;
b) 50 bis 80 Gew.-%, bevorzugt 60 bis 80 Gew.-%, Copolymer P-III; und
c) 0 bis 10 Gew.-%, bevorzugt 0 bis 5 Gew.-%, Additive und/oder Verarbeitungshilfsmittel D';

wobei sich die Anteile der Komponenten a) bis c) zu 100 Gew.-% addieren.
Falls die Komponente (c) vorhanden ist, beträgt deren Anteil üblicherweise mindestens 0,01 Gew.-%, bevorzugt mindestens 0,05 Gew.-%, besonders bevorzugt mindestens 0,1 Gew.-%.
Die erfindungsgemäße Formmasse F kann ferner optional d) ein oder mehrere, nicht aus Vinylmonomeren aufgebaute thermoplastische Polymere TP enthalten.
Der Anteil der thermoplastischen Polymere TP kann, bezogen auf 100 Gew.-Teile der Komponenten a) und b) (d.h. der Gesamtmasse aus der Mischung P und dem kautschukfreien Copolymer P-III), 0 bis 1000 Gew.-Teile, bevorzugt 0 bis 700 Gew.-Teile, besonders bevorzugt 0 bis 500 Gew.-Teile, insbesondere 0 bis 100 Gew.-Teile, umfassen.
Bevorzugt besteht die thermoplastische Formmasse F aus den vorstehend genannten Komponenten (a) und (b), sowie optional (c) und/oder (d).

Kautschukfreie Copolymer-Matrix P-III

Die mindestens eine kautschukfreie Matrix-Komponente P-III (Komponente (b)) ist mindestens ein Copolymer aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol und/oder Acrylnitril durch Maleinsäureanhydrid.
Bevorzugt ist die kautschukfreie Matrix-Komponente P-III mindestens ein Copolymer aus Styrol und Acrylnitril im Gewichtsverhältnis Styrol:Acrylnitril von 65:35 bis 80:20, wobei Styrol teilweise ersetzt werden kann durch alpha-Methylstyrol und/oder Acrylnitril durch Maleinsäureanhydrid.
Besonders bevorzugt ist die kautschukfreie Matrix-Komponente P-III mindestens ein Copolymer aus Styrol und Acrylnitril im Gewichtsverhältnis Styrol:Acrylnitril von 68:32 bis 77:23, wobei Styrol teilweise ersetzt werden kann durch

alpha-Methylstyrol und/oder und Acrylnitril durch Maleinsäureanhydrid.

Ganz besonders bevorzugt ist die kautschukfreie Matrix-Komponente P-III mindestens ein Copolymer aus Styrol und Acrylnitril in den vorgenannten Styrol:Acrylnitril -Gewichtsverhältnissen, wobei das Copolymer ein Copolymer aus Styrol und Acrylnitril allein ist (d.h. kein Ersatz durch weitere Comonomere).

Ebenso ganz besonders bevorzugt ist die kautschukfreie Matrix-Komponente P-III mindestens ein Copolymer (bzw. Terpolymer) von Styrol, Acrylnitril und Maleinsäureanhydrid, bevorzugt im Gewichtsverhältnis Styrol:Acrylnitril:Maleinsäureanhydrid von 65:34:1 bis 70:25:5.

Weiterhin ganz besonders bevorzugt ist die kautschukfreie Matrix-Komponente P-III eine Mischung von mindestens einem Copolymer aus Styrol und Acrylnitril allein in den vorgenannten Styrol:Acrylnitril Gewichtsverhältnissen und mindestens einem Copolymer (bzw. Terpolymer) von Styrol, Acrylnitril und Maleinsäureanhydrid im Gewichtsverhältnis Styrol:Acrylnitril:Maleinsäureanhydrid von 65:34:1 bis 70:25:5.

Die mindestens eine kautschukfreie Matrix-Komponente P-III besitzt vorzugsweise eine mittlere Molmasse Mw (Gewichtsmittel, ermittelt durch Lichtstreuung oder Sedimentation) zwischen 15.000 und 200.000 und/oder eine Grenzviskosität [$\eta$] von 20 bis 110 ml/g (gemessen in Dimethylformamid bei 25°C).

Kautschukfreie Matrix-Komponenten P-III sind bekannt und lassen sich durch radikalische Polymerisation, insbesondere durch Emulsions-, Suspensions-, Lösungs- oder Massepolymerisation herstellen. Einzelheiten zur Herstellung derartiger kautschukfreier Matrix-Komponenten sind beispielsweise in DE-A 24 20 358, DE-A 27 24 360 und der DE-A 1 971 3509 beschrieben. Die Initiierung kann sowohl rein thermisch erfolgen als auch durch Zusatz von Initiatoren, insbesondere Peroxiden. Durch Masse- bzw. Lösungspolymerisation hergestellte Matrix-Komponenten P-III sind besonders bevorzugt.

Ein bevorzugtes Ausführungsbeispiel eines kautschukfreien Copolymers P-III ist auch dem untenstehenden experimentellen Beispielteil zu entnehmen.

Thermoplastische Polymere TP

Außer aus Vinylmonomeren aufgebauten thermoplastischen Komponenten - wie Komponente (b) - ist auch die Verwendung von Polykondensaten, wie beispielsweise aromatischen Polycarbonaten, aromatischen Polyestercarbonaten, Polyestern, Polyamiden als kautschukfreie Copolymer-Matrix in der Formmasse möglich. Diese werden dann als thermoplastische Polymere TP (optionale Komponente (c)) eingesetzt.

Zahlreiche geeignete thermoplastische Polycarbonate und Polyestercarbonate sind bekannt (vgl. beispielsweise DE-A 14 95 626, DE-A 22 32 877, DE-A 27 03 376, DE-A 27 14 544, DE-A 30 00 610, DE-A 38 32396, sowie insbesondere DE-A 100 08 420 und WO 2012/022710.

Erfindungsgemäß geeignete aromatische Polycarbonate und/oder aromatische Polyestercarbonate eingesetzt als thermoplastische Polymere T sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626 , DE-A 2 232 877 , DE-A 2 703 376 , DE-A 2 714 544 , DE-A 3 000 610 , DE-A 3 832 396 ; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

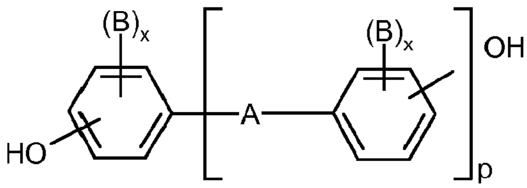

(I),

wobei

A

eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, -$SO_2$-, $C_6$

bis $C_{12}$-Arylen, an das weitere aromatische gegebenenfalls Heteroatome enthaltende Ringe kondensiert sein können,

oder ein Rest der Formel (II) oder (III)

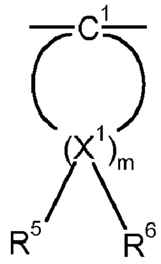

(II)

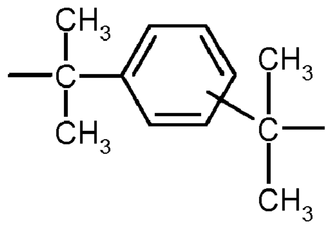

(III)

B jeweils $C_1$ bis $C_{12}$-Alkyl, vorzugsweise Methyl, Halogen, vorzugsweise Chlor und/oder Brom

X jeweils unabhängig voneinander 0, 1 oder 2,

p 1 oder 0 sind, und

$R^5$ und $R^6$ für jedes $X_1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethyl-butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 mol-%, und 10 mol-%, bezogen auf die Molsumme der jeweils eingesetzten Diphenole.

Die thermoplastischen, aromatischen Polycarbonate haben mittlere gewichtsmittlere Molmassen (Mw, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung von Copolycarbonaten als thermoplastisches Polymer T können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt ( US 3 419 634 ) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934 ).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbonsäuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Außerdem sind als thermoplastische Polymere T (Komponente (c)) Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethyleyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diaminodicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus 70 bis 99 Mol-% des 4,4'-Diamino-Isomeren, 1 bis 30 Mol-% des 2,4'-Diamino-Isomeren, 0 bis 2 Mol-% des 2,2'-Diamino-Isomeren und gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine Viskositätszahl (VZ, bestimmt nach ISO 307 an 0,5 gew.-%iger Lösung in konzentrierter Schwefelsäure (96 Gew.-% $H_2SO_4$ bei 25°C) von 90-150 ml/g, besonders bevorzugt von 105-135 ml/g auf.

<u>Additive und/oder Verarbeitungshilfsmittel D'</u>

Als Komponente (c) können den erfindungsgemäßen Formmassen bei der Herstellung, Aufarbeitung, Weiterverarbeitung und Endverformung die erforderlichen bzw. zweckmäßigen Additive und/oder Verarbeitungshilfsmittel D' zugesetzt werden.

Beispiele für Additive und/oder Verarbeitungshilfsmittel D' sind Schmierstoffe, Trennmittel, Wachse, Pigmente, Farbstoffe, Flammschutzmittel, Antioxidantien, UV-Stabilisatoren, faser- oder pulverförmige Füllstoffe, faser- oder pulverförmige Verstärkungsmittel, sowie Antistatika und deren Mischungen.

Beispiele für geeignete Schmier- und Trennmittel sind Stearinsäuren, Stearylalkohol, Stearinsäureester, Stearamide sowie Silikonöle, Montanwachse und solche auf Polyethylen- oder Polypropylenbasis. Diese Schmierstoffe und Formtrennmittel werden im Allgemeinen in Mengen von bis zu 4 Gew.-%, vorzugsweise bis zu 3 Gew.-%, bezogen auf 100 Gew.-% der Formmasse aus den Komponenten (a), (b) und (c), verwendet.

Beispiele für Pigmente sind Titandioxid, Phthalocyanine, Ultramarinblau, Eisenoxide und Ruß sowie die gesamte Klasse der organischen und anorganischen Pigmente.

Im Sinne der vorliegenden Erfindung sind Farbstoffe alle Farbstoffe, die zur transparenten, halbtransparenten oder undurchsichtigen Einfärbung von Polymeren verwendet werden können, insbesondere solche Farbstoffe, die zum Einfärben von Styrol-Copolymeren geeignet sind. Derartige Farbstoffe sind dem Fachmann bekannt. Diese Pigmente und Farbstoffe werden im Allgemeinen in Mengen bis zu 20 Gew.-%, vorzugsweise bis zu 10 Gew.-%, bezogen auf 100 Gew.-% der Formmasse aus den Komponenten (a), (b) und (c), verwendet.

Beispiele für geeignete Flammschutzmittel sind Antimonoxide wie $Sb_2O_3$ und/oder halogenierte organische Verbindungen.

Besonders geeignete Antioxidantien sind sterisch gehinderte ein- oder mehrkernige phenolische Antioxidantien, die verschiedene Substituenten aufweisen können und auch eine Brückenbildung durch Substituenten aufweisen. Dazu gehören sowohl monomere als auch oligomere Verbindungen, die aus zwei oder mehreren phenolischen Bausteinen aufgebaut sein können. Es ist auch möglich, Hydrochinone oder Hydrochinon-analoge oder substituierte Verbindungen oder andere Antioxidantien auf Basis von Tocopherolen oder deren Derivaten zu verwenden. Es ist auch möglich, Mischungen aus verschiedenen Antioxidantien zu verwenden. In der Regel werden die Antioxidantien in Mengen bis zu 4 Gew.-%, bezogen auf 100 Gew.-% der Formmasse aus den Komponenten (a), (b) und (c), eingesetzt. Grundsätzlich können alle handelsüblichen oder für Styrol-Copolymere geeigneten Verbindungen verwendet werden.

Zusammen mit den oben als Beispiel genannten phenolischen Antioxidantien können so genannte Costabilizer, insbesondere phosphor- oder schwefelhaltige Costabilizer, gleichzeitig eingesetzt werden. Diese P- oder S-haltigen Kostenstabilisatoren sind dem Facharbeiter bekannt und im Handel erhältlich.

Beispiele für geeignete Antioxidantien sind:

Ester von 3,5-di-tert.-Butyl-4-hydroxyphenylessigsäure mit ein- oder mehrwertigen Alkoholen, wie z.B. und vorzugsweise Dekanol, Undecanol, Dodecanol, Tridecanol, Tetradecanol, Pentadecanol, Hexadecanol, Octadecanol, 1,6-Hexandiol, Neopentylglykol, 1,9-Nonandiol, Ethylenglykol, Diethylenglykol, Triethylenglykol, Pentaerythritol, 3-Thiaundecanol, 3-Thiapentadecanol, Trimethylolpropan,

Ester von β-(3,5-di-tert.-butyl-4-hydroxyphenyl)-propionsäure mit den vorgenannten ein- oder mehrwertigen Alkoholen, und

Ester von β-(5-tert.-butyl-4-hydroxy-3-methylphenyl)-propionsäure mit ein- oder mehrwertigen Alkoholen, mit den vorgenannten ein- oder mehrwertigen Alkoholen,

Ester von β-(3,5-Dicyclohexyl-4-hydroxyphenyl)-propionsäure mit den vorgenannten ein- oder mehrwertigen Alkoholen.

Bevorzugte Antioxidantien sind 3,3'-Thiodipropionsäure-Dioctadecylester (CAS-Nr. 693-36-7), Octadecyl-3-(3,5-di-tert.butyl-4-hydroxyphenyl)-propionat (CAS-Nr. 2082-79-3und das butylierte Reaktionsprodukt aus p-Kresol und Dicyclopentadien (CAS-Nr. 68610-51-5).

Beispiele für geeignete Stabilisatoren gegen die Wirkung von Licht sind verschiedene substituierte Resorzinole, Salicylate, Benzotriazole, Benzophenone und HALS (Lichtschutzmittel mit gehindertem Amin), z.B. solche, die als Tinuvin im Handel erhältlich sind.

Bevorzugt werden Tinuvin 770 DF 1, bis(2,2,6,6,6,-Tetramethyl-4-piperidyl)sebaceat (CAS-Nr. 52829-07-9), Tinuvin P, 2-(2H-Benzotriazol-2-yl)-p-Kresol (CAS-Nr. 2H). 2440-22-4), Cyasorb UV 3853, 2,2,6,6,6-Tetramethyl-4-piperidinylstearat (CAS-Nr. 167078-06-0), Hostavin N 845 (CAS-Nr. 86403-32-9) und Mischungen davon.

Diese Stabilisatoren können im Allgemeinen in Mengen von bis zu 4 Gew.-%, vorzugsweise bis zu 3 Gew.-%, bezogen auf 100 Gew.-% der Formmasse aus den Komponenten (a), (b) und (c), verwendet werden.

Beispiele für faserige oder pulverförmige Füllstoffe sind Kohlefasern und Glasfasern in Form von Glasgeweben, Glasmatten oder Glasseidenrovings, Hackglas, Glasperlen sowie Wollastonit, insbesondere Glasfasern.

Bei der Verwendung von Glasfasern können diese mit einer Größe und einem Haftvermittler versehen worden sein, um die Kompatibilität mit den Komponenten der Mischung zu verbessern. Die eingearbeiteten Glasfasern können entweder in Form von kurzen Glasfasern oder in Form von kontinuierlichen Strängen (Rovings) vorliegen. Diese Füllstoffe können im Allgemeinen in Mengen von bis zu 20 Gew.-%, vorzugsweise bis zu 10 Gew.-%, bezogen auf 100 Gew.-% der Formmasse aus den Komponenten (a), (b) und (c), verwendet werden.

Wenn nicht ausdrücklich erwähnt, werden die einzelnen Additive und/oder Verarbeitungshilfsmittel D' in den für den Fachmann üblichen Einsatzmengen verwendet, so dass es in diesem Zusammenhang unnötig ist, weitere Angaben zu machen.

Ein weiterer Aspekt der vorliegenden Erfindung ist ein Verfahren zur Herstellung einer thermoplastischen Formmasse F gemäß der Erfindung.

Gemäß dem erfindungsgemäßen Verfahren erfolgt die Herstellung der thermoplastischen Formmasse F gemäß der Erfindung durch Vermengen der Komponenten (a), (b) und gegebenenfalls (c) und/oder (d), und Compoundierung in der Schmelze, bevorzugt bei einer Temperatur von 200 bis 300°C.

Bei dem erfindungsgemäßen Verfahren werden die jeweiligen Bestandteile in bekannter Weise vermischt und bei geeigneten Temperaturen, insbesondere bei 200°C bis 300°C, in üblichen Aggregaten wie Innenknetern, Extrudern und Doppelwellenschnecken schmelzecompoundiert und schmelzeextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Dabei kann die Herstellung der erfindungsgemäßen thermoplastischen Formmasse F sowohl direkt über die Vermischung der jeweiligen Bestandteile als auch durch die Verwendung von Konzentraten/Präcompounds dieser Bestandteile erfolgen. Diese Konzentrate werden in bekannter Weise bei geeigneten Temperaturen, insbesondere bei 200°C bis 300°C, in üblichen Aggregaten wie Innenknetern, Extrudern und Doppelwellenschnecken hergestellt.

Formkörper und Verwendung

Darüber hinaus sind weitere Gegenstände der Erfindung ein Verfahren zur Herstellung von Formkörpern aus den erfindungsgemäßen Formmassen, Formkörper hergestellt aus den erfindungsgemäßen Formmassen, und die Verwendung der erfindungsgemäßen Formmassen und/oder der erfindungsgemäßen Formkörper.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien und die Folienhinterspritzung.

Beispiele für solche Formkörper sind Folien, Profile, Gehäuseteile jeder Art, beispielsweise für Haushaltsgeräte wie Saftpressen, Kaffeemaschinen, Mixer, Fernsehgeräte; für Büromaschinen wie Monitore, Drucker, Kopierer, Notebooks, Flatscreens; Karosserie- bzw. Innenbauteile für Nutzfahrzeuge, insbesondere für den Automobilbereich; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen. Insbesondere können die erfindungsgemäßen Formmassen auch zur Herstellung von folgenden Formkörpern verwendet werden: Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formkörper für Sanitär- und Badausrüstungen, Abdeckgitter für Lüfteröffnungen, Formkörper für Garten- und Gerätehäuser, Gehäuse für Gartengeräte.

Die im Folgenden gezeigten Beispiele und Ansprüche erläutern die Erfindung.

Beispiele

Polybutadien-Latex C

Polybutadien-Latex C ist anionisch stabilisiert und hat einen mittleren Teilchendurchmesser $d_{50}$ von 125 nm und einen Gelgehalt von 93 Gew.-%. Die Herstellung erfolgt unter Verwendung von 6,0 Gew.-% (gerechnet als Feststoff), bezogen auf die eingesetzte Butadienmenge, eines Polybutadiensaatlatex C' mit einem mittleren Teilchendurchmesser $d_{50}$ von 49 nm als Saat durch radikalische Emulsionspolymerisation. Die Herstellung eines Batches des Polybutadien-Latex C dauert 32 Stunden. Der Feststoffgehalt beträgt 40 Gew.-%.

Polybutadien-Latex A

Polybutadien-Latex A ist anionisch stabilisiert und hat einen mittleren Teilchendurchmesser $d_{50}$ von 305 nm und einen Gelgehalt von 60 Gew.-%. Die Herstellung erfolgt unter Verwendung von 3,1 Gew.-% (gerechnet als Feststoff), bezogen auf die eingesetzte Butadienmenge, eines Polybutadien-Saatlatex C mit einem mittleren Teilchendurchmesser $d_{50}$ von 125 nm durch radikalische Emulsionspolymerisation. Die Herstellung eines Polybutadien-Latex A-Batches dauert 50 Stunden. Der Feststoffgehalt beträgt 48 Gew.-%.

Polybutadien-Latex B

Polybutadien-Latex B ist anionisch stabilisiert und hat einen mittleren Teilchendurchmesser $d_{50}$ von 395 m und einen Gelgehalt von 82 Gew.-%. Die Herstellung erfolgt unter Verwendung von 1,15 Gew.-% (gerechnet als Feststoff), bezogen auf eingesetzte Butadienmenge, eines Polybutadien-Saatlatex C mit einem mittleren Teilchendurchmesser $d_{50}$ von 125 nm durch radikalische Emulsionspolymerisation. Die Herstellung eines Polybutadien-Latex B-Batches dauert 95 Stunden. Der Feststoffgehalt beträgt 50 Gew.-%.

In Tabelle 1 wird eine gemittelte Batch-Dauer [h] für die Herstellung der Polybutadien-Latizes A bis C angegeben, die wie folgt ermittelt wird:

Gew.-% Polybutadien-Latex A * Batchdauer Latex A [h] + Gew.-% Polybutadien-Latex B * Batchdauer Latex B [h] + Gew.-% Poybutadien-Latex C * Batchdauer Latex C [h].

Dabei bezieht sich die Angabe der Gew.-% jeweils auf den Feststoff der Latizes A bis C in den Mischungen P oder den thermoplastischen Formmassen F, und die Summe der Gew.-% der Polybutadien-Latizes A bis C ergibt 100%.

Herstellung der ABS-Pfropfkautschuke (ABS-Pfropfcopolymere)

Pfropfkautschuk P-II-1

51,5 Gew.-Teile (gerechnet als Feststoff) eines anionisch stabilisierten Polybutadien-Latex C mit einem mittleren Teilchendurchmesser $d_{50}$ von 125 nm und einem Gelgehalt von 93 Gew.-%, welcher unter Verwendung von 6,0 Gew.-% eines Polybutadiensaatlatex C' mit einem mittleren Teilchendurchmesser $d_{50}$ von 49 nm als Saat durch radikalische Emulsionspolymerisation hergestellt wurde, wurde mit entionisiertem Wasser auf einen Feststoffgehalt von ca. 27 Gew.-% gebracht.

Der Polybutadien-Latex C wurde auf 60°C erwärmt und mit 0,25 Gew.-Teilen Kaliumperoxodisulfat (gelöst in Wasser) versetzt. Danach wurden 48,5 Gew.-Teile eines Gemisches aus 74,5 Gew.-% Styrol, 25,5 Gew.-% Acrylnitril und 0,1 Gew.-Teile tert- Dodecylmercaptan innerhalb von 5 Stunden gleichmäßig dosiert. Parallel dazu wurde 1 Gew.-Teil (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 5 Stunden dosiert. Parallel dazu wurden 0,25 Gew.-Teile Kaliumperoxodisulfat (gelöst in Wasser) über einen Zeitraum von

5 Stunden dosiert.

Im Laufe der ersten 3 Stunden wurde die Reaktionstemperatur von 60°C auf 81°C angehoben. Nach Ende aller Dosierungen folgte eine zweistündige Nachreaktionszeit bei 81°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfkautschuks betrug 34,3 Gew.-%.

Pfropfkautschuk P-I-1

30 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, und 30 Gew.-Teile (gerechnet als Feststoff) eines anionisch stabilisierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, wurden gemischt und mit entionisiertem Wasser auf einen Feststoffgehalt von ca. 27 Gew.-% gebracht.

Die Mischung der Polybutadien-Latizes A und B wurde auf 60°C erwärmt und mit 0,25 Gew.- Teilen Kaliumperoxodisulfat (gelöst in Wasser) versetzt. Danach wurden 40 Gew.-Teile eines Monomergemisches aus 74,5 Gew.-% Styrol, 25,5 Gew.-% Acrylnitril und 0,12 Gew.- Teile tert-Dodecylmercaptan innerhalb von 5 Stunden gleichmäßig dosiert. Parallel dazu wurde 1 Gew.-Teil (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 5 Stunden dosiert. Parallel dazu wurden 0,25 Gew.-Teile Kaliumperoxodisulfat (gelöst in Wasser) über einen Zeitraum von 5 Stunden dosiert.

Im Laufe der ersten 3 Stunden wurde die Reaktionstemperatur von 60°C auf 81°C angehoben. Nach Ende aller Dosierungen folgte eine zweistündige Nachreaktionszeit bei 81°C. Anschließend wurde Pfropfkautschuklatex auf Raumtemperatur abgekühlt.

Der gravimetrisch ermittelte Feststoffgehalt (Trocknung im Umlufttrockenschrank bei 180°C, 23 Minuten) des Pfropfkautschuks P-I-1 betrug 35,0 Gew.-%.

Pfropfkautschuk P-I-2

Die Herstellung erfolgt gemäß der Vorschrift für Pfropfkautschuk P-I-1, wobei 36 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.- %, welcher unter Verwendung eines Polybutadien-Saatlatex C mit einem mittleren Teilchendurchmesser $d_{50}$ von 125 nm durch radikalische Emulsionspolymerisation hergestellt wurde, und 24 Gew.-Teile (gerechnet als Feststoff) eines stabilisierten emulgierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, eingesetzt wurden.

Pfropfkautschuk P-I-3

Die Herstellung erfolgt gemäß der Vorschrift für Pfropfkautschuk P-I-1, wobei 39 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.- %, welcher unter Verwendung eines Polybutadien-Saatlatex C mit einem mittleren Teilchendurchmesser $d_{50}$ von 125 nm durch radikalische Emulsionspolymerisation hergestellt wurde, und 21 Gew.-Teile (gerechnet als Feststoff) eines anionisch stabilisierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, eingesetzt wurden.

Pfropfkautschuk P-I-4

Die Herstellung erfolgt gemäß der Vorschrift für Pfropfkautschuk P-I-1, wobei 42 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.- %, welcher unter Verwendung eines Polybutadien-Saatlatex C mit einem mittleren Teilchendurchmesser $d_{50}$ von 125 nm durch radikalische Emulsionspolymerisation hergestellt wurde, und 18 Gew.-Teile

(gerechnet als Feststoff) eines anionisch stabilisierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, eingesetzt wurden.

Pfropfkautschuk P-I-5

Die Herstellung erfolgt gemäß der Vorschrift für Pfropfkautschuk P-I-1, wobei 45 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.- %, welcher unter Verwendung eines Polybutadien-Saatlatex C mit einem mittleren Teilchendurchmesser $d_{50}$ von 125 nm durch radikalische Emulsionspolymerisation hergestellt wurde, und 15 Gew.-Teile (gerechnet als Feststoff) eines anionisch stabilisierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, eingesetzt wurden.

Pfropfkautschuk P-I-6

Die Herstellung erfolgt gemäß der Vorschrift für Pfropfkautschuk P-I-1, wobei 48 Gew.-Teile (gerechnet als Feststoff) eines anionisch stabilisierten Polybutadien-Latex A mit einem mittleren Teilchendurchmesser $d_{50}$ von 305 nm und einem Gelgehalt von 60 Gew.- %, welcher unter Verwendung eines Polybutadien-Saatlatex C mit einem mittleren Teilchendurchmesser $d_{50}$ von 125 nm durch radikalische Emulsionspolymerisation hergestellt wurde, und 12 Gew.-Teile (gerechnet als Feststoff) eines anionisch stabilisierten Polybutadien-Latex B mit einem mittleren Teilchendurchmesser $d_{50}$ von 395 nm und einem Gelgehalt von 82 Gew.-%, welcher unter Verwendung eines Polybutadien-Saatlatex C mit einem mittleren Teilchendurchmesser $d_{50}$ von 125 nm durch radikalische Emulsionspolymerisation hergestellt wurde, eingesetzt wurden.

Pfropfkautschukmischung P-1

Die Latizes der Pfropfkautschuke P-II-1 und P-I-1 wurden im Gewichtsverhältnis 35% : 65%, gerechnet als Feststoff, durch Rühren vermischt und gleichzeitig wurde zu dieser Mischung der Pfropfkautschuke 1,0 Gew.-% eines phenolischen Antioxidans (Irganox 1076, BASF SE), bezogen auf den Gesamtfeststoffgehalt der Pfropfkautschukmischung, in Form einer Dispersion zugegeben und vermischt.

Anschließend wurde die erhaltene Pfropfkautschukmischung P-1 mit einer Magnesiumsulfat/Schwefelsäure-Lösung gefällt. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P-1 enthaltend die Pfropfkautschuke P-II-1 und P-I-1 in der Dispersion betrug 16 Gew.-%.

Die Koagulation wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Mischung P-1 wurde durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet. Das Material wurde in Form eines feinteiligen Pulvers mit einer mittleren Teilchengröße $d_{50}$ von ca. 400 μm erhalten. Die Ermittlung der Korngröße $d_{50}$ wurde durch Siebanalyse nach ISO 3310-1 mit folgenden Sieben: 63, 100, 150, 200, 300, 500, 800 und 2000 μm durchgeführt.

Pfropfkautschukmischung P-2

Die Latizes der Pfropfkautschuke P-II-1 und P-I-1 wurden im Gewichtsverhältnis 40% : 60%, gerechnet als Feststoff, durch Rühren vermischt und gleichzeitig wurde zu dieser Mischung der Pfropfkautschuklatizes 1,0 Gew.-% eines phenolischen Antioxidans (Irganox 1076, BASF SE), bezogen auf den Gesamtfeststoff der Pfropfkautschukmischung, in Form einer Dispersion zugegeben und vermischt.

Anschließend wurde die erhaltene Pfropfkautschukmischung mit einer Magnesiumsulfat/Schwefelsäure-Lösung ausgefällt. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P-2 enthaltend die Pfropfkautschuke P-II-1 und P-I-1 in der Dispersion betrug 16 Gew.- %. Die Koagulation wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Mischung P-2 wurde durch Vakuumfiltration von der wässrigen Phase abgetrennt und mit 1000 Gew.-Teilen Wasser gewaschen. Das resultierende feuchte

Pulver wurde bei 70°C im Umlufttrockenschrank bis zu einer Restfeuchte < 1 Gew.-% (gravimetrische Bestimmung) getrocknet. Das Material wurde in Form eines feinteiligen Pulvers mit einer mittleren Teilchengröße $d_{50}$ von ca. 400 μm erhalten. Die Ermittlung der Korngröße $d_{50}$ wurde durch Siebanalyse nach ISO 3310-1 mit folgenden Sieben: 63, 100, 150, 200, 300, 500, 800 und 2000 μm durchgeführt.

Pfropfkautschukmischungen P-3, P-4, P-5, P-6, P-7

Der Latex eines Pfropfkautschuks P-II-1 und jeweils ein Latex eines Pfropfkautschuks P-I-1, P-I-3 bis P-I-6 wurden im Gewichtsverhältnis 45% : 55%, gerechnet als Feststoff, durch Rühren vermischt und gleichzeitig wurde zu dieser Mischung der Pfropfkautschuklatizes 1,0 Gew.-% eines phenolischen Antioxidans (Irganox 1076, BASF SE), bezogen auf den Gesamtfeststoff der Pfropfkautschukmischung, in Form einer Dispersion zugegeben und vermischt. Dabei wurde jeweils ein Latex einer Pfropfkautschukmischung P erhalten:

Pfropfkautschukmischung P-3 enthaltend die Pfropfkautschuke P-II-1 und P-I-1,

Pfropfkautschukmischung P-4 enthaltend die Pfropfkautschuke P-II-1 und P-I-3,

Pfropfkautschukmischung P-5 enthaltend die Pfropfkautschuke P-II-1 und P-I-4,

Pfropfkautschukmischung P-6 enthaltend die Pfropfkautschuke P-II-1 und P-I-5,

Pfropfkautschukmischung P-7 enthaltend die Pfropfkautschuke P-II-1 und P-I-6.

Anschließend wurde die jeweilige erhaltene Pfropfkautschukmischung mit einer Magnesiumsulfat/Schwefelsäure-Lösung ausgefällt. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P-3, P-4, P-5, P-6 und P-7 in der Dispersion betrug jeweils 16 Gew.- %. Die Koagulation wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Pfropfkautschukmischungen P-3, P-4, P-5, P-6 und P-7 wurden jeweils durch Vakuumfiltration von der wässrigen Phase abgetrennt und mit 1000 Gew.-Teilen Wasser gewaschen.

Das resultierende feuchte Pulver wurde bei 70°C im Umlufttrockenschrank bis zu einer Restfeuchte < 1 Gew.-% (gravimetrische Bestimmung) getrocknet. Das Material wurde in Form eines feinteiligen Pulvers mit einer mittleren Teilchengröße $d_{50}$ von ca. 400 μm erhalten. Die Ermittlung der Korngröße $d_{50}$ wurde durch Siebanalyse nach ISO 3310-1 mit folgenden Sieben: 63, 100, 150, 200, 300, 500, 800 und 2000 μm durchgeführt.

Pfropfkautschukmischungen P-8, P-9, P-10, P-11, P-12, P-13, P-14

Die Latizes der Pfropfkautschuke P-II-1 und P-I-2 wurden in den in der Tabelle 1 angegebenen Verhältnissen, gerechnet als Feststoff, durch Rühren vermischt und gleichzeitig wurde zu dieser Mischung der Pfropfkautschuklatizes 1,0 Gew.-% eines phenolischen Antioxidans (Irganox 1076, BASF SE), bezogen auf den Gesamtfeststoff der Pfropfkautschukmischung, in Form einer Dispersion zugegeben und vermischt.

Dabei wurde jeweils ein Latex einer Pfropfkautschukmischung P-8, P-9, P-10, P-11, P-12, P-13 bzw. P-14 erhalten.

Anschließend wurde die jeweilige erhaltene Pfropfkautschukmischung mit einer Magnesiumsulfat/Schwefelsäure-Lösung gefällt.

Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P-8, P-9, P-10, P-11, P-12, P-13 bzw. P-14 in der Dispersion betrug 16 Gew.- %. Die Koagulation wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Pfropfkautschukmischung P-8, P-9, P-10, P-11, P-12, P-13 bzw. P-14 wurden jeweils durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet. Das Material wurde in Form eines feinteiligen Pulvers mit einer mittleren Teilchengröße $d_{50}$ von ca. 400 μm erhalten. Die Ermittlung der Korngröße $d_{50}$ wurde durch Siebanalyse nach ISO 3310-1 mit folgenden Sieben: 63, 100, 150, 200, 300, 500, 800 und 2000 μm durchgeführt.

Pfropfkautschukmischung P-15 (analog zu WO 2001/62848, Beispiele 8-10)

Die Latizes der Pfropfkautschuke P-II-1 und P-I-1 wurden im Gewichtsverhältnis 50% : 50%, gerechnet als Feststoff, durch Rühren vermischt und gleichzeitig wurde zu dieser Mischung der Pfropfkautschuklatizes 1,0 Gew.-% eines phenolischen Antioxidans (Irganox 1076, BASF SE), bezogen auf den Gesamtfeststoff der Pfropfkautschukmischung, in Form einer Dispersion zugegeben und vermischt.

Anschließend wurde die erhaltene Pfropfkautschukmischung mit einer Magnesiumsulfat/Schwefelsäure-Lösung ausgefällt. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P-15 enthaltend die Pfropfkautschuke P-II-1 und P-I-1 in der Dispersion betrug 16 Gew.- %. Die Koagulation wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Mischung P-15 wurde durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet. Das Material wurde in Form eines feinteiligen Pulvers mit einer mittleren Teilchengröße $d_{50}$ von ca. 400 $\mu$m erhalten. Die Ermittlung der Korngröße $d_{50}$ wurde durch Siebanalyse nach ISO 3310-1 mit folgenden Sieben: 63, 100, 150, 200, 300, 500, 800 und 2000 $\mu$m durchgeführt.

Herstellung von ABS-Formmassen und -Formkörpern

Kautschukfreie Copolymer-Matrix P-III-1

Als kautschukfreie Copolymer-Matrix P-III-1 wurde ein statistisches Styrol/Acrylnitril-Copolymer (Styrol-Acrylnitril-Gewichtsverhältnis 73:27) mit einer gewichtsgemittelten Molmasse $M_w$ von 106.000 g/mol und einer zahlengemittelten Molmasse $M_n$ von 15.000 g/mol eingesetzt. Die kautschukfreie Copolymer-Matrix P-III-1 wurde erhalten durch radikalische Lösungspolymerisation mit peroxidischer Initiierung und wies einen Oligomerengehalt mit einer Molmasse kleiner 1000 g/mol von 1,0 Gew.-% auf. Die Molmassen $M_w$ und $M_n$, sowie der Oligomerengehalt wurden durch Gelpermeationschromatographie mit Tetrahydrofuran als Lösungsmittel und Polystyrol zur Kalibrierung ermittelt. Zur Bestimmung des Oligomerenanteils in statistischem Styrol/Acrylnitril-Copolymer siehe: K. Kirchner, H. Schlapkohl, Makromol. Chem. 177 (1976) 2031 -2042, "The Formation of Oligomers in the Thermal Copolymerisation of the Styrene/Acrylonitrile- System".

Kautschukfreie Copolymer-Matrix P-III-2

Als kautschukfreie Copolymer-Matrix P-III-2 wurde ein statistisches Styrol/Acrylnitril-Copolymer (Styrol-Acrylnitril-Gewichtsverhältnis 76,5:23,5) mit einer gewichtsgemittelten Molmasse $M_w$ von 145.000 g/mol und einer Polydispersität von $M_w/M_n$ < 3 eingesetzt. Die Molmassen $M_w$ und $M_n$ wurden durch Gelpermeationschromatographie mit Tetrahydrofuran als Lösungsmittel und Polystyrol zur Kalibrierung ermittelt. Die kautschukfreie Copolymer-Matrix P-III-2 wurde erhalten durch radikalische Lösungspolymerisation und wies eine thermoplastische Fließfähigkeit (MVR) bei 220°C und 10 kg von 40 ml/10 Minuten auf.

Kautschukfreie Copolymer-Matrix P-III-3

Als kautschukfreie Copolymer-Matrix P-III-3 wurde ein statistisches Styrol/Acrylnitril-Copolymer (Styrol-Acrylnitril-Gewichtsverhältnis 75:25) mit einer gewichtsgemittelten Molmasse $M_w$ von 185.000 g/mol und einer Polydispersität von $M_w/M_n$ < 3 eingesetzt. Die Molmassen $M_w$ und $M_n$ wurden durch Gelpermeationschromatographie mit Tetrahydrofuran als Lösungsmittel und Polystyrol zur Kalibrierung ermittelt. Die kautschukfreie Copolymer-Matrix P-III-3 wurde erhalten durch radikalische Lösungspolymerisation und wies eine thermoplastische Fließfähigkeit (MVR) bei 220°C und 10 kg von 10 ml/10 Minuten auf.

Kautschukfreie Copolymer-Matrix P-III-4

Als kautschukfreie Copolymer-Matrix P-III-4 wurde ein durch radikalische Lösungspolymerisation hergestelltes statistisches Terpolymer aus Styrol, Acrylnitril und Maleinsäureanhydrid (Styrol-Acrylnitril-Maleinsäureanhydrid Gewichtsverhältnis 66,4:31,5:2,1) eingesetzt, welches eine thermoplastische Fließfähigkeit (MVR) bei 220°C und 10 kg von 18-26 ml/10 Minuten aufweist.

Polycarbonat (T-1):

Es wurde lineares Polycarbonat auf Bisphenol-A Basis mit einem gewichtsgemittelten Molekulargewicht $M_w$ von 27.500 g/mol verwendet. Die Molmasse $M_w$ wurde durch Gelpermeationschromatographie mit Methylenchlorid als Lösungsmittel bei 25°C ermittelt.

Polyamid (T-2):

Es wurde Polyamid 6 mit einer Viskositätszahl von 105-135 ml/g verwendet. Die Viskositätszahl (VZ) des Polyamids wurde nach ISO 307 an 0,5 gew.-%iger Lösung in konzentrierter Schwefelsäure (96 Gew.-% $H_2SO_4$) bei 25°C bestimmt.

Thermoplastische Formmassen F1 bis F15

Zur Herstellung der Formmassen wurden die oben beschriebenen Pfropfkautschukmischungen P-1 bis P-14 jeweils in einer Menge von 30,0 Gew.-Teilen eingesetzt. 30 Gew.-Teile Pfropfkautschukmischung und 70 Gew.-Teile Styrol/Acrylnitril-Copolymer P-III-1 wurde zusammen mit 2,0 Gew.-Teilen Ethylenbisstearylamid, 0,30 Gew.-Teilen Magnesiumstearat und 0,15 Gew.-Teilen eines Polydimethylsiloxans mit einer Viskosität von 1000 mPas (Messung bei 25°C) in einem Extruder ZSK 25 (Hersteller Coperion) bei 250°C vermischt, wobei die Formmassen F1 bis F15 erhalten wurden. Nach Granulierung der Formmassen F1 bis F15 wurden diese zu Formkörpern verarbeitet und geprüft (s. Tabelle 1).

Folgende Eigenschaften der Formmassen F bzw. Formkörper wurden ermittelt:

- Kerbschlagzähigkeit (Charpy) bei Raumtemperatur (ak RT) nach DIN EN ISO 179-2/1eA (Einheit: kJ/$m^2$)
- thermoplastische Fließfähigkeit: MVR (220/10) bei 220°C und 10 kg Belastung nach ISO 1133 (Einheit: $cm^3$/10 min)
- Vicat-Erweichungstemperatur B/50 nach ISO 306 (Einheit °C)
- Kugeldruckhärte nach ISO 2039-1 (Einheit MPa bzw. N/$mm^2$)
- Zugelastitzitätsmodul, E-Modul $E_t$ (Einheit MPa bzw. N/$mm^2$) aus einem Zugversuch nach EN ISO 527-1
- Glanz bei 20° nach DIN EN ISO 2813, die für den Spritzguss der Testplatten verwendeten Schmelze- und Formtemperaturen sind in Grad Celsius angegeben.
- Die Glanzstabilität ist erfindungsgemäß als der Quotient aus dem Glanz bei 20° bei ungünstigen, aber praxisnahen (280°C/50°C) Spritzgussbedingungen dividiert durch den Glanz bei 20° unter optimalen (250°C/80°C) Spritzgussbedingungen definiert (der Wert ist in Prozent angegeben).
- $d_{50}$: Für die Messung der Teilchengrößenverteilung der Kautschuklatizes (Polybutadienlatizes) mit der Scheibenzentrifuge DC 24000 von CPS Instruments Inc., die mit einer Scheibe mit niedriger Dichte ausgestattet ist, wurde eine wässrige Zuckerlösung von 17,1 mL mit einem Dichtegradienten von 8 bis 20 Gew.-% Saccharose in der Zentrifugenscheibe verwendet, um ein stabiles Flotationsverhalten der Partikel zu erreichen. Zur Kalibrierung wurde ein Polybutadienlatex mit einer engen Verteilung und einer mittleren Partikelgröße von 405 nm verwendet. Die Messungen wurden bei einer Rotationsgeschwindigkeit der Scheibe von 24.000 U/min durchgeführt, indem 0,1 mL einer verdünnten Kautschukdispersion in eine wässrige 24%ige Saccharoselösung injiziert wurden. Die Massenverteilung der Teilchendurchmesser wurde mit Hilfe der Mie-Theorie berechnet.
- Kautschukeffektivität (KE-Zahl) (dimensionslos): Maß für die Leistung des Pfropfkautschuks, definiert als die Summe von Kerbschlagzähigkeit bei Raumtemperatur (ak RT) und thermoplastischer Fließfähigkeit (MVR (220/10)). Je höher der Wert von KE-Zahl, desto besser die Kautschukeffektivität.

Die hierin genannten DIN-, ASTM- und ISO-Normen sind bevorzugt die im Juli 2022 aktuellen Versionen.

4-Vinyl-1-Cyclohexen (VCH)-Gehalt der Pfropfkautschukmischungen P

Der Gehalt an 4-Vinyl-1-Cyclohexen (VCH) in den Pfropfkautschukmischungen P wird durch Headspace-Gaschromatographie bestimmt. Dazu werden die Latex-Proben (Mischungen der Pfropflatizes P-I und P-II) mit internen Standards versetzt (Mesitylen und Butyronitril), mit Dimethylsulfoxid verdünnt (5 g DMSO pro 1 g Latex), dispergiert und mit einem Gaschromatographen der Firma PerkinElmer Typ Clarus 680 für 30 Min bei 94°C erhitzt und dann gemessen. Verwendet werden hierzu die Trennsäulen A (30 m Kapillarsäule Elite-WAX 0,32 mm Durchmesser, Filmdicke 1 μm) und B (30 m Kapillarsäule DB-WAX 0,32 mm Durchmesser, Filmdicke 1 μm) sowie FID Detektor und Helium als Trägergas. Die Headspace-Temperaturen betragen: Ofen 100°C / Nadel 110°C / Transferline 150°C. Der Gehalt wird in ppm bezogen auf den Feststoff der Pfropfkautschukmischung P angegeben (siehe Tabelle).

Die Formmassen der erfindungsgemäßen Beispiele 4, 5 und 11-14 (s. Tabelle 1) verfügen über eine sehr gute

Oberflächenqualität und einen Glanz, der nur wenig von den Spritzgussparametern abhängt (= hohe Glanzstabilität). Für die Verarbeitung im Spritzguss ist es sehr erheblich, dass nicht nur für ein Produkt unter optimalen Spritzgussbedingungen ein perfekter Glanz der Formteile erhalten wird, sondern, dass auch unter nicht idealen bis im Grunde genommen ungünstigen in der Praxis zu findenden Spritzgussbedingungen noch ein akzeptabler Glanz erhalten wird. Dadurch können für die Verarbeitung im Spritzguss durch Zeitersparnis Kosten reduziert und die Kapazität einer Spritzgussmaschine erhöht werden. Als sehr gute Spritzgussbedingungen ist eine Kombination aus einer Massetemperatur von 250°C und einer Werkzeugtemperatur von 80° anzusehen, und als schlechte Spritzgussbedingungen ist eine Kombination aus einer Massetemperatur von 280°C und einer Werkzeugtemperatur von 50° anzusehen.

Die Formmassen F4, F5, F11 bis F14 gemäß der Erfindung weisen einerseits auch unter nicht idealen, schlechten Spritzgussbedingungen eine gute Oberflächenqualität auf und andererseits nur geringe Mengen an organisch flüchtigen Verbindungen (VOCs) in Form von 4-Vinylcyclohexen. Zudem zeigen die erfindungsgemäßen Pfropfcopolymermischungen P-8, P-9, P-4 bis P-7 und die daraus hergestellten Formmassen F4, F5, F11 bis F14 eine gute Zähigkeit (Schlagzähigkeit und/oder Kerbschlagzähigkeit) und gleichzeitig eine gute Verarbeitbarkeit (thermoplastische Fließfähigkeit, MVR), was sich auch in einer guten Kautschukeffektivität (KE-Zahl) wiederspiegelt. Ferner ist die gemittelte Batchdauer für die Herstellung der Butadienlatizes A, B und C, die für die erfindungsgemäßen Pfropfcopolymermischungen P eingesetzt werden, relativ kurz, was von ökonomischem und ökologischem Vorteil ist.

Tabelle 1: Zusammensetzung und Eigenschaften der Pfropfkautschukmischungen P und der Formmassen F

| Beispiele | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | | VB 1) | VB 1) | VB 1) | erf 2) | erf 2) | VB 1) | VB 1) | VB 1) | VB 1) | VB 1) | erf 2) | erf 2) | erf 2) | erf 2) | VB 1) |
| Zusammensetzung Pfropfkautschukmischung P | | P-1 | P-2 | P-3 | P-8 | P-9 | P-10 | P-11 | P-12 | P-13 | P-14 | P-4 | P-5 | P-6 | P-7 | P-15 |
| Pfropflatex P-II-1 | [Gew.-%] | 35 | 40 | 45 | 40 | 45 | 50 | 55 | 60 | 65 | 70 | 45 | 45 | 45 | 45 | 50 |
| Pfropflatex P-I-1 | [Gew.-%] | 65 | 60 | 55 | | | | | | | | | | | | 50 |
| Pfropflatex P-I-2 | [Gew.-%] | | | | 60 | 55 | 50 | 45 | 40 | 35 | 30 | | | | | |
| Pfropflatex P-I-3 | [Gew.-%] | | | | | | | | | | | 55 | | | | |
| Pfropflatex P-I-4 | [Gew.-%] | | | | | | | | | | | | 55 | | | |
| Pfropflatex P-I-5 | [Gew.-%] | | | | | | | | | | | | | 55 | | |
| Pfropflatex P-I-6 | [Gew.-%] | | | | | | | | | | | | | | 55 | |
| Anteil Butadienlatex C | [%] | 31,6 | 36,4 | 41,2 | 36,4 | 41,3 | 46,2 | 51,2 | 56,3 | 61,5 | 66,7 | 41,2 | 41,2 | 41,2 | 41,2 | 45,8 |
| Anteil Butadienlatex A | [%] | 34,2 | 31,8 | 29,4 | 38,2 | 35,2 | 32,3 | 29,3 | 26,2 | 23,1 | 20,0 | 38,2 | 41,2 | 44,1 | 47,0 | 27,1 |
| Anteil Butadienlatex B | [%] | 34,2 | 31,8 | 29,4 | 25,4 | 23,5 | 21,5 | 19,5 | 17,5 | 15,4 | 13,3 | 20,6 | 17,6 | 14,7 | 11,8 | 27,1 |
| Summe Butadienlatex A, B, C | [%] | 100 | 100 | 100 | 100 | 100 | 100 | 100 | 100 | 100 | 100 | 100 | 100 | 100 | 100 | 100 |
| Gemittelte Batchdauer Polybutadien-Latex | | 59,7 | 57,8 | 55,8 | 54,9 | 53,1 | 51,4 | 49,6 | 47,7 | 45,9 | 44,0 | 51,9 | 50,5 | 49,2 | 47,9 | 54,0 |
| VCH-Gehalt PfropfkautschukMischung P | [ppm] | 4380 | 4120 | 3880 | 3960 | 3710 | 3480 | 3220 | 2990 | 2730 | 2500 | 3640 | 3580 | 3490 | 3430 | 3620 |

Tabelle 1: Zusammensetzung und Eigenschaften der Pfropfkautschukmischungen P und der Formmassen F

| Beispiele | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | | VB[1)] | VB[1)] | VB[1)] | erf[2)] | erf[2)] | VB[1)] | VB[1)] | VB[1)] | VB[1)] | VB[1)] | erf[2)] | erf[2)] | erf[2)] | erf[2)] | VB[1)] |
| Zusammensetzung Pfropfkautschukmischung P | | P-1 | P-2 | P-3 | P-8 | P-9 | P-10 | P-11 | P-12 | P-13 | P-14 | P-4 | P-5 | P-6 | P-7 | P-15 |
| Pfropflatex P-II-1 | [Gew.-%] | 35 | 40 | 45 | 40 | 45 | 50 | 55 | 60 | 65 | 70 | 45 | 45 | 45 | 45 | 50 |
| Pfropflatex P-I-1 | [Gew.-%] | 65 | 60 | 55 | | | | | | | | | | | | 50 |
| Pfropflatex P-I-2 | [Gew.-%] | | | | 60 | 55 | 50 | 45 | 40 | 35 | 30 | | | | | |
| Pfropflatex P-I-3 | [Gew.-%] | | | | | | | | | | | 55 | | | | |
| Pfropflatex P-I-4 | [Gew.-%] | | | | | | | | | | | | 55 | | | |
| Pfropflatex P-I-5 | [Gew.-%] | | | | | | | | | | | | | 55 | | |
| Pfropflatex P-I-6 | [Gew.-%] | | | | | | | | | | | | | | 55 | |
| Anteil Butadienlatex C | [%] | 31,6 | 36,4 | 41,2 | 36,4 | 41,3 | 46,2 | 51,2 | 56,3 | 61,5 | 66,7 | 41,2 | 41,2 | 41,2 | 41,2 | 45,8 |
| Anteil Butadienlatex A | [%] | 34,2 | 31,8 | 29,4 | 38,2 | 35,2 | 32,3 | 29,3 | 26,2 | 23,1 | 20,0 | 38,2 | 41,2 | 44,1 | 47,0 | 27,1 |
| Anteil Butadienlatex B | [%] | 34,2 | 31,8 | 29,4 | 25,4 | 23,5 | 21,5 | 19,5 | 17,5 | 15,4 | 13,3 | 20,6 | 17,6 | 14,7 | 11,8 | 27,1 |
| Summe Butadienlatex A, B, C | [%] | 100 | 100 | 100 | 100 | 100 | 100 | 100 | 100 | 100 | 100 | 100 | 100 | 100 | 100 | 100 |
| Gemittelte Batchdauer Polybutadien-Latex | | 59,7 | 57,8 | 55,8 | 54,9 | 53,1 | 51,4 | 49,6 | 47,7 | 45,9 | 44,0 | 51,9 | 50,5 | 49,2 | 47,9 | 54,0 |
| VCH-Gehalt PfropfkautschukMischung P | [ppm] | 4380 | 4120 | 3880 | 3960 | 3710 | 3480 | 3220 | 2990 | 2730 | 2500 | 3640 | 3580 | 3490 | 3430 | 3620 |

## Patentansprüche

1. Mischung P enthaltend:

   (I) mindestens einen Pfropfkautschuk P-I, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, in Gegenwart von mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm, wobei die Polybutadienlatizes A und B mittels Saatpolymerisation ausgehend von mindestens einem, vorzugsweise einem, Polybutadienlatex C (als Saatlatex) mit einem mittleren Teilchendurchmesser $d_{50}$ von 10 bis 220 nm erhalten wurden;
   (II) mindestens einen Pfropfkautschuk P-II, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, in Gegenwart des mindestens einen Polybutadienlatex C mit einem mittleren Teilchendurchmesser $d_{50}$ von 10 bis 220 nm; und
   (III) optional ein oder mehrere Additive und/oder Verarbeitungshilfsmittel D,

   **dadurch gekennzeichnet,**

   **dass**, bezogen auf die eingesetzten Polybutadienlatizes A bis C (jeweils gerechnet als Feststoff der Latizes), deren Summe 100 Gew.-% beträgt, der Anteil des Polybutadienlatex C 36 bis 43 Gew.-% beträgt, und das Gewichtsverhältnis A:B der Polybutadienlatizes A und B von 1,1:1 bis 5:1 (jeweils gerechnet als Feststoff der Latizes A und B) beträgt,
   wobei der mittlere Teilchendurchmesser $d_{50}$ durch Scheibenzentrifugationsmessung ermittelt wird.

2. Mischung P gemäß Anspruch 1, **dadurch gekennzeichnet, dass** der Anteil des Polybutadienlatex C 37 bis 43 Gew.-%, bevorzugt 38 bis 42 Gew.-%, besonders bevorzugt 39 bis 42 Gew.-%, beträgt.

3. Mischung P gemäß Anspruch 1 oder 2, **dadurch gekennzeichnet, dass** das Gewichtsverhältnis A:B der eingesetzten Polybutadienlatizes A und B 1,3:1 bis 4,5:1 beträgt.

4. Mischung P gemäß einem der Ansprüche 1 bis 3, **dadurch gekennzeichnet, dass** der Polybutadienlatex A mittels Saatpolymerisation ausgehend von mindestens einem, vorzugsweise einem, Polybutadienlatex C erhalten wurde, und der Polybutadienlatex C in einer Menge von 1,90 bis 4,50 Gew.-%, bevorzugt 2,40 bis 3,80 Gew.-%, eingesetzt wurde, bezogen auf die gesamte eingesetzte Monomermenge zur Herstellung von Polybutadienlatex A.

5. Mischung P gemäß einem der Ansprüche 1 bis 4, **dadurch gekennzeichnet, dass** der Polybutadienlatex B mittels Saatpolymerisation ausgehend von mindestens einem, vorzugsweise einem, Polybutadienlatex C erhalten wurde, und der Polybutadienlatex C in einer Menge von 0,75 bis 1,55 Gew.-%, bevorzugt 0,95 bis 1,35 Gew.-%, eingesetzt wurde, bezogen auf die gesamte eingesetzte Monomermenge zur Herstellung von Polybutadienlatex B.

6. Mischung P gemäß einem der Ansprüche 1 bis 5, **dadurch gekennzeichnet, dass** der Polybutadienlatex C mittels Saatpolymerisation ausgehend von mindestens einem, vorzugsweise einem, Saatlatex C', vorzugsweise einem Polybutadiensaatlatex (als Saatlatex C'), erhalten wurde und der Saatlatex C' in einer Menge von 4,00 bis 9,00 Gew.-%, bevorzugt 5,50 bis 7,50 Gew.-%, eingesetzt wurde, bezogen auf die gesamte eingesetzte Monomermenge zur Herstellung von Polybutadienlatex C.

7. Mischung P gemäß einem der Ansprüche 1 bis 6, **dadurch gekennzeichnet, dass** der Pfropfkautschuk P-I durch Emulsionspolymerisation von Styrol und Acrylnitril im Gewichtsverhältnis von 80:20 bis 65:35 in Gegenwart der Polybutadienlatices A und B erhalten wurde; und der Pfropfkautschuk P-II durch Emulsionspolymerisation von Styrol und Acrylnitril im Gewichtsverhältnis von 80:20 bis 65:35 in Gegenwart des Polybutadienlatex C erhalten wurde.

8. Mischung P gemäß einem der Ansprüche 1 bis 7, **dadurch gekennzeichnet, dass** der Polybutadienlatex A einen mittleren Teilchendurchmesser $d_{50}$ von 240 bis 320 nm, insbesondere 250 bis 310 nm, und einen Gelgehalt von 30 bis 80 Gew.-%, bevorzugt 40 bis 75 Gew.-%, insbesondere 45 bis 70 Gew.-%, aufweist; der Polybutadienlatex B einen mittleren Teilchendurchmesser $d_{50}$ von 350 bis 470 nm, insbesondere 360 bis 460 nm, und einen Gelgehalt von 50 bis 95 Gew.-%, insbesondere 55 bis 90 Gew.-%, aufweist; und der Polybutadienlatex C einen mittleren Teilchendurch-

messer $d_{50}$ von 20 bis 210 nm, insbesondere 30 bis 200 nm, und einen Gelgehalt von 30 bis 98 Gew.-%, bevorzugt 40 bis 95 Gew.-%, insbesondere 50 bis 92 Gew.-%, aufweist, wobei der Gelgehalt durch die Drahtkäfigmethode in Toluol entsprechend der Beschreibung ermittelt wird.

**9.** Mischung P gemäß einem der Ansprüche 1 bis 8, wobei der Pfropfkautschuk P-I besteht aus:

15 bis 60 Gew.-%, insbesondere 20 bis 50 Gew.-%, einer Pfropfhülle, erhalten durch Emulsionspolymerisation von Styrol und Acrylnitril, wobei Styrol und/oder Acrylnitril teilweise ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus den Polybutadienlatices A und B; und
der Pfropfkautschuk P-II besteht aus:

15 bis 60 Gew.-%, insbesondere 20 bis 50 Gew.-%, einer Pfropfhülle, erhalten durch Emulsionspolymerisation von Styrol und Acrylnitril, wobei Styrol und/oder Acrylnitril teilweise ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus Polybutadienlatex C.

**10.** Verfahren zur Herstellung einer Mischung P gemäß einem der Ansprüche 1 bis 9 umfassend die folgenden Schritte:

(i) Bereitstellen von mindestens einem Polybutadienlatex C mit einem mittleren Teilchendurchmesser $d_{50}$ von 10 bis 220 nm;
(ii) Herstellen von mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm durch Saatpolymerisation aus dem Polybutadienlatex C aus Schritt (i);
(iii) Herstellen eines Pfropfkautschuks P-I durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, in Gegenwart der Polybutadienlatizes A und B aus Schritt (ii),
(iv) Herstellen eines Pfropfkautschuks P-II durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, in Gegenwart des Polybutadienlatex C aus Schritt (i);
(v) gegebenenfalls Mischen der Emulsionen enthaltend die Pfropfkautschuke P-I und P-II aus Schritten (iii) und (iv);
(vi) Aufarbeitung der Pfropfkautschuke P-I und P-II aus den Schritten (iii) und (iv) oder Schritt (v); und
(vii) falls Schritt (v) nicht vorhanden, Mischen der Pfropfkautschuke P-I und P-II aus Schritt (vi);

• wobei in Schritt (iii) das Gewichtsverhältnis A:B der eingesetzten Polybutadienlatizes A und B 1,1:1 bis 5:1, bevorzugt 1,3:1 bis 4,5:1, (jeweils gerechnet als Feststoff der Latizes A und B) beträgt, und
• wobei in Schritt (v) oder (vii) - bezogen auf die eingesetzten Polybutadienlatizes A bis C (jeweils gerechnet als Feststoff der Latizes), deren Summe 100 Gew.-% beträgt - der Anteil des mindestens einen Polybutadienlatex C 36 bis 43 Gew.-%, bevorzugt 37 bis 43 Gew.-%, besonders bevorzugt 38 bis 42 Gew.-%, beträgt.

**11.** Verfahren zur Herstellung einer Mischung P gemäß Anspruch 10, wobei die Aufarbeitung gemäß Schritt (vi) umfasst:

(vi-1) Fällen (gegebenenfalls Co-Fällen) der Pfropfkautschuke P-I und P-II aus der diese Pfropfkautschuke umfassenden Emulsion aus den Schritten (iii) und (iv) oder Schritt (v);
(vi-2) Abtrennen der gefällten Pfropfkautschuke P-I und P-II aus Schritt (vi-1) durch Filtration oder Zentrifugation; und
(vi-3) gegebenenfalls Trocknen der abgetrennten Pfropfkautschuke P-I und P-II aus Schritt (vi-2).

**12.** Mischung P gemäß einem der Ansprüche 1 bis 9, erhalten durch das Verfahren gemäß Anspruch 10 oder 11.

**13.** Thermoplastische Formmasse F enthaltend die Komponenten (a) bis (c):

(a) Mischung P gemäß einem der Ansprüche 1 bis 9 oder Anspruch 12;
(b) mindestens eine kautschukfreies Copolymer P-III aus Styrol und Acrylnitril im Gewichtsverhältnis von 95:5 bis

50:50, bevorzugt 80:20 bis 65:35, wobei Styrol teilweise ersetzt werden kann durch alpha-Methylstyrol und/oder Acrylnitril durch Maleinsäureanhydrid; und
(c) optional ein oder mehrere Additive und/oder Verarbeitungshilfsmittel D'.

**14.** Thermoplastische Formmasse F gemäß Anspruch 13, welche ferner (d) ein oder mehrere, nicht aus Vinylmonomeren aufgebaute thermoplastische Polymere TP - ausgewählt aus der Gruppe bestehend aus: aromatischen Polycarbonaten, aromatischen Polyestercarbonaten, Polyestern, und Polyamiden - enthält.

**15.** Verfahren zur Herstellung einer thermoplastischen Formmasse F gemäß Anspruch 13 oder 14, wobei die Komponenten (a), (b) und gegebenenfalls (c) und/oder (d) vermengt und in der Schmelze, bevorzugt bei einer Temperatur von 200 bis 300°C, compoundiert werden.

**16.** Formkörper aus einer Formmasse F gemäß Anspruch 13 oder 14 erhältlich durch Spritzguss, Extrusion, Blasformverfahren oder durch Tiefziehen.

**17.** Verwendung einer Formmasse F gemäß Anspruch 13 oder 14 oder eines Formkörpers gemäß Anspruch 16 für Gehäuseteile bzw. Bauteile im Haushalts-, Büro-, Automobil- und/oder Gartenbereich.

## Claims

**1.** Mixture P containing:

(I) at least one graft rubber P-I obtained by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, in the presence of at least one polybutadiene latex A with an average particle diameter $d_{50}$ of 230 to 330 nm and at least one polybutadiene latex B with an average particle diameter $d_{50}$ of 340 to 480 nm, wherein the polybutadiene latexes A and B have been obtained by seed polymerization starting from at least one, preferably one, polybutadiene latex C (as seed latex) with an average particle diameter $d_{50}$ of from 10 to 220 nm;
(II) at least one graft rubber P-II obtained by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, in the presence of the at least one polybutadiene latex C with an average particle diameter $d_{50}$ of from 10 to 220 nm; and
(III) optionally one or more additives and/or processing aids D,

**characterized in that**,

based on the polybutadiene latexes A to C used
(in each case calculated as solids of the latices), the sum of which is 100% by weight, the proportion of polybutadiene latex C is 36 to 43% by weight, and the weight ratio A:B of the polybutadiene latices A and B is from 1.1:1 to 5:1 (in each case calculated as solids of the latices A and B),
wherein the average particle diameter $d_{50}$ is determined by disk centrifugation measurement.

**2.** Mixture P according to claim 1, **characterized in that** the proportion of polybutadiene latex C is 37 to 43% by weight, preferably 38 to 42% by weight, particularly preferably 39 to 42% by weight.

**3.** Mixture P according to claim 1 or 2, **characterized in that** the weight ratio A:B of the polybutadiene latices A and B used is 1.3:1 to 4.5:1.

**4.** Mixture P according to any one of claims 1 to 3, **characterized in that** the polybutadiene latex A was obtained by seed polymerization starting from at least one, preferably one, polybutadiene latex C, and the polybutadiene latex C was used in an amount of 1.90 to 4.50% by weight, preferably 2.40 to 3.80% by weight, based on the total amount of monomer used for the preparation of polybutadiene latex A.

**5.** Mixture P according to any one of claims 1 to 4, **characterized in that** the polybutadiene latex B was obtained by seed polymerization starting from at least one, preferably one, polybutadiene latex C, and the polybutadiene latex C was used in an amount of 0.75 to 1.55% by weight, preferably 0.95 to 1.35% by weight, based on the total amount of

monomer used to prepare polybutadiene latex B.

**6.** Mixture P according to any one of claims 1 to 5, **characterized in that** the polybutadiene latex C was obtained by seed polymerization starting from at least one, preferably one, seed latex C', preferably a polybutadiene seed latex (as seed latex C'), and the seed latex C' was used in an amount of 4.00 to 9.00% by weight, preferably 5.50 to 7.50% by weight, based on the total amount of monomer used to prepare polybutadiene latex C.

**7.** Mixture P according to any one of claims 1 to 6, **characterized in that** the graft rubber P-I was obtained by emulsion polymerization of styrene and acrylonitrile in a weight ratio of 80:20 to 65:35 in the presence of the polybutadiene latexes A and B; and the graft rubber P-II was obtained by emulsion polymerization of styrene and acrylonitrile in a weight ratio of 80:20 to 65:35 in the presence of the polybutadiene latex C.

**8.** Mixture P according to one of claims 1 to 7, **characterized in that** the polybutadiene latex A has an average particle diameter $d_{50}$ of 240 to 320 nm, in particular 250 to 310 nm, and a gel content of 30 to 80% by weight, preferably 40 to 75% by weight, in particular 45 to 70% by weight; the polybutadiene latex B has an average particle diameter $d_{50}$ of 350 to 470 nm, in particular 360 to 460 nm, and a gel content of 50 to 95% by weight, in particular 55 to 90% by weight; and the polybutadiene latex C has an average particle diameter $d_{50}$ of 20 to 210 nm, in particular 30 to 200 nm, and a gel content of 30 to 98% by weight, preferably 40 to 95% by weight, in particular 50 to 92% by weight, wherein the gel content is determined by the wire cage method in toluene according to the description.

**9.** Mixture P according to any one of claims 1 to 8, wherein the graft rubber P-I consists of:

15 to 60% by weight, in particular 20 to 50% by weight, of a graft shell obtained by emulsion polymerization of styrene and acrylonitrile, wherein styrene and/or acrylonitrile can be partially replaced by alpha-methylstyrene, methyl methacrylate, N-phenylmaleimide or mixtures thereof; and
40 to 85% by weight, in particular 50 to 80% by weight, of a graft base from the polybutadiene latices A and B; and the graft rubber P-II consists of:

15 to 60% by weight, in particular 20 to 50% by weight, of a graft shell obtained by emulsion polymerization of styrene and acrylonitrile, wherein styrene and/or acrylonitrile can be partially replaced by alpha-methylstyrene, methyl methacrylate, N-phenylmaleimide or mixtures thereof; and
40 to 85% by weight, in particular 50 to 80% by weight, of a graft base of polybutadiene latex C.

**10.** Process for preparing a mixture P according to any one of claims 1 to 9, comprising the following steps:

(i) providing at least one polybutadiene latex C with an average particle diameter $d_{50}$ of 10 to 220 nm;
(ii) preparing at least one polybutadiene latex A with an average particle diameter $d_{50}$ of 230 to 330 nm and at least one polybutadiene latex B with an average particle diameter $d_{50}$ of 340 to 480 nm by seed polymerization from the polybutadiene latex C from step (i);
(iii) preparing a graft rubber P-I by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, in the presence of the polybutadiene latices A and B from step (ii),
(iv) preparing a graft rubber P-II by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, in the presence of the polybutadiene latex C from step (i);
(v) optionally mixing the emulsions containing the graft rubbers P-I and P-II from steps (iii) and (iv);
(vi) processing the graft rubbers P-I and P-II from steps (iii) and (iv) or step (v); and
(vii) if step (v) is not present, mixing the graft rubbers P-I and P-II from step (vi);

- wherein in step (iii) the weight ratio A:B of the polybutadiene latices A and B used is 1.1:1 to 5:1, preferably 1.3:1 to 4.5:1 (in each case calculated as solids of the latices A and B), and
- wherein in step (v) or (vii) - based on the polybutadiene latices A to C used (in each case calculated as solids of the latices), the sum of which is 100% by weight - the proportion of the at least one polybutadiene latex C is 36 to 43% by weight, preferably 37 to 43% by weight, particularly preferably 38 to 42% by weight.

**11.** Process for preparing a mixture P according to claim 10, wherein the processing according to step (vi) comprises:

(vi-1) precipitation (optionally co-precipitation) of the graft rubbers P-I and P-II from the emulsion comprising these graft rubbers from steps (iii) and (iv) or step (v);
(vi-2) separation of the precipitated graft rubbers P-I and P-II from step (vi-1) by filtration or centrifugation; and
(vi-3) optionally, drying of the separated graft rubbers P-I and P-II from step (vi-2).

**12.** Mixture P according to any one of claims 1 to 9, obtained by the process according to claim 10 or 11.

**13.** Thermoplastic molding composition F containing components (a) to (c):

(a) mixture P according to any one of claims 1 to 9 or claim 12;
(b) at least one rubber-free copolymer P-III of styrene and acrylonitrile in a weight ratio of 95:5 to 50:50, preferably 80:20 to 65:35, wherein styrene can be partially replaced by alpha-methylstyrene and/or acrylonitrile by maleic anhydride; and
(c) optionally one or more additives and/or processing aids D'.

**14.** Thermoplastic molding composition F according to claim 13, further comprising (d) one or more thermoplastic polymers TP not composed of vinyl monomers selected from the group consisting of: aromatic polycarbonates, aromatic polyester carbonates, polyesters, and polyamides.

**15.** Process for preparing a thermoplastic molding composition F according to claim 13 or 14, wherein components (a), (b) and optionally (c) and/or (d) are mixed and compounded in the melt, preferably at a temperature of 200 to 300 °C.

**16.** Molded article of a molding composition F according to claim 13 or 14 obtainable by injection molding, extrusion, blow molding or thermoforming.

**17.** Use of a molding composition F according to claim 13 or 14 or a molded article according to claim 16 for housing parts or components in the household, office, automotive and/or garden sector.

## Revendications

**1.** Mélange P contenant :

(I) au moins un caoutchouc greffé P-I, obtenu par polymérisation en émulsion de styrène et d'acrylonitrile dans un rapport pondéral styrène:acrylonitrile de 95:5 à 50:50, le styrène et/ou l'acrylonitrile pouvant être partiellement remplacés par de l'alpha-méthylstyrène, du méthacrylate de méthyle et/ou du N-phénylmaléimide, en présence d'au moins un latex de polybutadiène A ayant un diamètre moyen de particule $d_{50}$ de 230 à 330 nm et d'au moins un latex de polybutadiène B ayant un diamètre moyen de particule $d_{50}$ de 340 à 480 nm, les latex de polybutadiène A et B étant obtenus par polymérisation d'ensemencement à partir d'au moins un, de préférence un, latex de polybutadiène C (en tant que latex d'ensemencement) ayant un diamètre moyen de particules $d_{50}$ de 10 à 220 nm ;
(II) au moins un caoutchouc greffé P-II, obtenu par polymérisation en émulsion de styrène et d'acrylonitrile dans un rapport pondéral styrène:acrylonitrile de 95:5 à 50:50, le styrène et/ou l'acrylonitrile pouvant être partiellement remplacés par de l'alpha-méthylstyrène, du méthacrylate de méthyle et/ou du N-phénylmaléimide, en présence dudit au moins un latex de polybutadiène C ayant un diamètre moyen de particule $d_{50}$ de 10 à 220 nm ; et
(III) éventuellement un ou plusieurs additifs et/ou auxiliaires de fabrication D,

**caractérisé en ce que**,

par rapport aux latex de polybutadiène utilisés A à C
(respectivement calculé en tant que matière solide des latex), dont la somme s'élève à 100 % en poids, la proportion du latex de polybutadiène C s'élève à 36 à 43 % en poids, et le
rapport pondéral A:B des latex de polybutadiène A et B est de 1,1:1 à 5:1 (respectivement calculé en tant que matière solide des latex A et B),
le diamètre moyen des particules $d_{50}$ étant déterminé par mesure de centrifugation de disque.

**2.** Mélange P selon la revendication 1, **caractérisé en ce que** la proportion de latex de polybutadiène C est de 37 à 43 % en poids, de préférence de 38 à 42 % en poids, de manière particulièrement préférée de 39 à 42 % en poids.

3. Mélange P selon la revendication 1 ou 2, **caractérisé en ce que** le rapport pondéral A:B des latex de polybutadiène A et B utilisés est de 1,3:1 à 4,5:1.

4. Mélange P selon l'une des revendications 1 à 3, **caractérisé en ce que** le latex de polybutadiène A a été obtenu par polymérisation d'ensemencement à partir d'au moins un, de préférence un, latex de polybutadiène C, et le latex de polybutadiène C a été utilisé en une quantité de 1,90 à 4,50 % en poids, de préférence de 2,40 à 3,80 % en poids, par rapport à la quantité totale de monomère utilisée pour la préparation du latex de polybutadiène A.

5. Mélange P selon l'une des revendications 1 à 4, **caractérisé en ce que** le latex de polybutadiène B a été obtenu par polymérisation d'ensemencement à partir d'au moins un, de préférence un, latex de polybutadiène C, et le latex de polybutadiène C a été utilisé en une quantité de 0,75 à 1,55 % en poids, de préférence de 0,95 à 1,35 % en poids, par rapport à la quantité totale de monomère utilisée pour la préparation du latex de polybutadiène B.

6. Mélange P selon l'une des revendications 1 à 5, **caractérisé en ce que** le latex de polybutadiène C a été obtenu par polymérisation d'ensemencement à partir d'au moins un, de préférence un, latex d'ensemencement C', de préférence un latex d'ensemencement de polybutadiène (en tant que latex d'ensemencement C'), et le latex d'ensemencement C' a été utilisé en une quantité de 4,00 à 9,00 % en poids, de préférence de 5,50 à 7,50 % en poids, par rapport à la quantité totale de monomère utilisée pour la préparation du latex de polybutadiène C.

7. Mélange P selon l'une des revendications 1 à 6, **caractérisé en ce que** le caoutchouc greffé P-I a été obtenu par polymérisation en émulsion de styrène et d'acrylonitrile dans un rapport pondéral de 80:20 à 65:35 en présence de latex de polybutadiène A et B ; et le caoutchouc greffé P-II a été obtenu par polymérisation en émulsion de styrène et d'acrylonitrile dans un rapport pondéral de 80:20 à 65:35 en présence du latex de polybutadiène C.

8. Mélange P selon l'une des revendications 1 à 7, **caractérisé en ce que** le latex de polybutadiène A a un diamètre moyen de particules $d_{50}$ de 240 à 320 nm, en particulier de 250 à 310 nm, et une teneur en gel de 30 à 80 % en poids, de préférence de 40 à 75 % en poids, en particulier de 45 à 70 % en poids ; le latex de polybutadiène B a un diamètre moyen de particules $d_{50}$ de 350 à 470 nm, en particulier de 360 à 460 nm, et une teneur en gel de 50 à 95 % en poids, en particulier de 55 à 90 % en poids ; et le latex de polybutadiène C a un diamètre moyen de particules $d_{50}$ de 20 à 210 nm, en particulier de 30 à 200 nm, et une teneur en gel de 30 à 98 % en poids, de préférence de 40 à 95 % en poids, en particulier de 50 à 92 % en poids, la teneur en gel étant déterminée par la méthode de la cage métallique dans le toluène, conformément à la description.

9. Mélange P selon l'une des revendications 1 à 8, dans lequel le caoutchouc greffé P-I est constitué de :

   15 à 60 % en poids, en particulier 20 à 50 % en poids, d'une enveloppe de greffage obtenue par polymérisation en émulsion de styrène et d'acrylonitrile, le styrène et/ou l'acrylonitrile pouvant être partiellement remplacés par de l'alpha-méthylstyrène, du méthacrylate de méthyle, du N-phénylmaléimide ou des mélanges de ceux-ci ; et
   40 à 85 % en poids, en particulier 50 à 80 % en poids, d'une base de greffage constituée des latex de polybutadiène A et B ; et
   le caoutchouc greffé P-II est composé de :

      15 à 60 % en poids, en particulier 20 à 50 % en poids, d'une enveloppe de greffage obtenue par polymérisation en émulsion de styrène et d'acrylonitrile, le styrène et/ou l'acrylonitrile pouvant être partiellement remplacés par de l'alpha-méthylstyrène, du méthacrylate de méthyle, du N-phénylmaléimide ou des mélanges de ceux-ci ; et
      40 à 85 % en poids, en particulier 50 à 80 % en poids, d'une base de greffage de latex de polybutadiène C.

10. Procédé de préparation d'un mélange P selon l'une des revendications 1 à 9 comprenant les étapes suivantes :

   (i) mise à disposition d'au moins un latex de polybutadiène C ayant un diamètre moyen de particule $d_{50}$ de 10 à 220 nm ;
   (ii) préparation d'au moins un latex de polybutadiène A ayant un diamètre moyen de particules $d_{50}$ de 230 à 330 nm et d'au moins un latex de polybutadiène B ayant un diamètre moyen de particules $d_{50}$ de 340 à 480 nm par polymérisation d'ensemencement du latex de polybutadiène C de l'étape (i) ;
   (iii) préparation d'un caoutchouc greffé P-I par polymérisation en émulsion de styrène et d'acrylonitrile dans un rapport pondéral styrène:acrylonitrile de 95:5 à 50:50, le styrène et/ou l'acrylonitrile pouvant être partiellement remplacés par de l'alpha-méthylstyrène, du méthacrylate de méthyle et/ou du N-phénylmaléimide, en présence

des latex de polybutadiène A et B de l'étape (ii) ;
(iv) préparation d'un caoutchouc greffé P-II par polymérisation en émulsion de styrène et d'acrylonitrile dans un rapport pondéral styrène:acrylonitrile de 95:5 à 50:50, le styrène et/ou l'acrylonitrile pouvant être partiellement remplacés par de l'alpha-méthylstyrène, du méthacrylate de méthyle et/ou du N-phénylmaléimide, en présence du latex de polybutadiène C de l'étape (i) ;
(v) éventuellement mélange des émulsions contenant les caoutchoucs greffés P-I et P-II des étapes (iii) et (iv) ;
(vi) traitement des caoutchoucs greffés P-I et P-II des étapes (iii) et (iv) ou de l'étape (v); et
(vii) si l'étape (v) n'est pas présente, mélange des caoutchoucs greffés P-I et P-II de l'étape (vi) ;

- dans l'étape (iii), le rapport pondéral A:B des latex de polybutadiène A et B utilisés étant de 1,1:1 à 5:1, de préférence de 1,3:1 à 4,5: 1, (respectivement calculé en tant que matière solide des latex A et B), et
- dans l'étape (v) ou (vii) - par rapport aux latex de polybutadiène A à C utilisés (respectivement calculé en tant que matière solide des latex), dont la somme s'élève à 100 % en poids - la proportion de l'au moins un latex de polybutadiène C étant de 36 à 43 % en poids, de préférence de 37 à 43 % en poids, de manière particulièrement préférée de 38 à 42 % en poids.

**11.** Procédé de préparation d'un mélange P selon la revendication 10, dans lequel le traitement selon l'étape (vi) comprend :

(vi-1) Précipitation (éventuellement coprécipitation) des caoutchoucs greffés P-I et P-II à partir de l'émulsion comprenant ces caoutchoucs greffés des étapes (iii) et (iv) ou de l'étape (v) ;
(vi-2) séparation des caoutchoucs greffés précipités P-I et P-II de l'étape (vi-1) par filtration ou centrifugation ; et
(vi-3) éventuellement, séchage des caoutchoucs greffés P-I et P-II séparés de l'étape (vi-2).

**12.** Mélange P selon l'une des revendications 1 à 9, obtenu par le procédé selon la revendication 10 ou 11.

**13.** Masse de moulage thermoplastique F contenant les composants (a) à (c) :

(a) Mélange P selon l'une des revendications 1 à 9 ou la revendication 12 ;
(b) au moins un copolymère P-III sans caoutchouc de styrène et d'acrylonitrile dans un rapport pondéral de 95:5 à 50:50, de préférence de 80:20 à 65:35, le styrène pouvant être partiellement remplacé par de l'alpha-méthylstyrène et/ou l'acrylonitrile par de l'anhydride maléique ; et
(c) éventuellement un ou plusieurs additifs et/ou auxiliaires de fabrication D'.

**14.** Masse de moulage thermoplastique F selon la revendication 13, qui comprend en outre (d) un ou plusieurs polymères thermoplastiques TP non constitués de monomères vinyliques - choisis dans le groupe constitué par : des polycarbonates aromatiques, des polyestercarbonates aromatiques, des polyesters, et des polyamides.

**15.** Procédé de préparation d'une masse de moulage thermoplastique F selon la revendication 13 ou 14, dans lequel les composants (a), (b) et éventuellement (c) et/ou (d) sont mélangés et compoundés à l'état fondu, de préférence à une température de 200 à 300 °C.

**16.** Pièce moulée à partir d'une masse de moulage F selon la revendication 13 ou 14, pouvant être obtenu par moulage par injection, par extrusion, par moulage par soufflage ou par emboutissage.

**17.** Utilisation d'une masse de moulage F selon la revendication 13 ou 14 ou d'une pièce moulée selon la revendication 16 pour des pièces de boîtier ou des composants dans le domaine de la maison, du bureau, de l'automobile et/ou du jardin.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 200162848 A
- WO 2014170407 A
- DE S3639904
- DE S3913509
- WO 2017093468 A1
- EP 0867463 A
- DE 2420358 A
- DE 2724360 A
- DE 19713509 A
- DE 1495626 A
- DE 2232877 A
- DE 2703376 A
- DE 2714544 A
- DE 3000610 A
- DE 3832396 A
- DE 10008420 A
- WO 2012022710 A
- DE S1495626 A
- DE 3077934 A
- DE 2842005 A
- US 3419634 A
- DE 3334782 A
- DE 2940024 A
- DE 3007934 A


### In der Beschreibung aufgeführte Nicht-Patentliteratur


- **HOUBEN-WEYL**. Methoden der Organischen Chemie, Makromolekulare Stoffe. Thieme Verlag, 1961, 307
- **HOUBEN-WEYL**. Methoden der Organischen Chemie, Makromolekulare Stoffe. Thieme Verlag, 1961, 339
- **KRISCHER** ; **KRÖLL**. Trocknungstechnik, Zweiter Band, Trockner und Trocknungsverfahren. Springer-Verlag, 1959
- **SCHNELL**. Chemistry and Physics of Polycarbonates. Interscience Publishers, 1964
- *CHEMICAL ABSTRACTS*, 693-36-7
- *CHEMICAL ABSTRACTS*, 2082-79-3
- *CHEMICAL ABSTRACTS*, 68610-51-5
- *CHEMICAL ABSTRACTS*, 52829-07-9
- *CHEMICAL ABSTRACTS*, 2440-22-4
- *CHEMICAL ABSTRACTS*, 167078-06-0
- *CHEMICAL ABSTRACTS*, 86403-32-9
- **K. KIRCHNER** ; **H. SCHLAPKOHL**. The Formation of Oligomers in the Thermal Copolymerisation of the Styrene/Acrylonitrile- System. *Makromol. Chem.*, 1976, vol. 177, 2031-2042